# EUROPEAN PATENT APPLICATION

(11) **EP 4 834 474 A1**
(43) Date of publication of application: **04.11.2026**
(21) Application number: 24912746.5
(22) Date of filing: 23.12.2024
(51) Int. Cl.: B01J 35/57, B01D 53/86, B01J 23/63

(54) **EXHAUST GAS PURIFICATION CATALYST**

(30) Priority: 28.12.2023 JP 2023223613
(71) Applicant: Mitsui Kinzoku Company, Limited, Tokyo 141-8584 (JP)
(72) Inventor: ASAKOSHI, Toshiki, Ageo-shi, Saitama (JP); NAKAMURA, Kouta, Ageo-shi, Saitama (JP); WATANABE, Tokuya, Ageo-shi, Saitama (JP); IWAKURA, Hironori, Ageo-shi, Saitama (JP)
(74) Representative: Novagraaf Technologies
(86) International application number: PCT/JP2024/045516
(87) International publication number: WO 2025/142859

(57) **Abstract**

An object of the present invention is to provide an exhaust gas purification catalyst capable of achieving both improvement of the exhaust gas purification performance of an Rh-containing layer and improvement of the exhaust gas purification performance of a portion located below the Rh-containing layer, and in order to achieve the object, the present invention provides an exhaust gas purification catalyst (1) including: a substrate (10); a first catalyst layer (20) provided on the substrate (10); a second catalyst layer (30) provided on the first catalyst layer (20); and a third catalyst layer (40) provided on the second catalyst layer (30), wherein the first catalyst layer (20) contains Pd, wherein the second catalyst layer (30) contains Rh and Ce, wherein the third catalyst layer (40) contains Rh and Al and/or Zr, wherein a content of Rh in terms of metal in the third catalyst layer (40) is larger than a content of Rh in terms of metal in the second catalyst layer (30), wherein a content of Ce in terms of CeO₂ in the second catalyst layer (30) is 7% by mass or more, wherein a content of Ce in terms of CeO₂ in the third catalyst layer (40) is less than 7% by mass, and wherein an average thickness of the third catalyst layer (40) is 10 µm or less.

## Description

### FIELD OF INVENTION

The present invention relates to an exhaust gas purification catalyst.

### BACKGROUND ART

Exhaust gas emitted from internal combustion engines of automobiles, motorcycles, and the like contains harmful components such as hydrocarbons (HC), carbon monoxide (CO), and nitrogen oxides (NOx). For the purpose of purifying and detoxifying these harmful components, noble metal elements such as Pd and Rh are used as catalytically active components of exhaust gas purification catalysts.

Since Pd and Rh are expensive, it is required to enhance exhaust gas purification performance as much as possible while using a limited amount of Pd and Rh.

As an example of an exhaust gas purification catalyst that satisfies such a requirement, Patent Document 1 discloses an exhaust gas purification catalyst including a substrate, a lower layer provided on the substrate and containing Pd, and an upper layer provided on the lower layer, wherein an Rh-containing layer is formed in a surface portion of the upper layer. In the exhaust gas purification catalyst described in Patent Document 1, since the Rh-containing layer is formed in the surface portion of the upper layer that easily comes into contact with exhaust gas, it is possible to improve the contact between exhaust gas and Rh.

When a catalytically active component such as Rh is exposed to a high-temperature environment, it aggregates, resulting in a decrease in active sites. This phenomenon is more likely to occur as the concentration of the catalytically active component increases. In the present specification, the resistance of a catalyst layer to aggregation of a catalytically active component contained in the catalyst layer when the catalyst layer is exposed to a high-temperature environment is referred to as "heat resistance of the catalyst layer". In the present specification, "high temperature" refers to a temperature of 850°C or higher, particularly 900°C or higher.

The Rh-containing layer in Patent Document 1 contains Al and Zr, which are components that improve the heat resistance of the Rh-containing layer (hereinafter also referred to as "heat resistance components").

### CITATION LIST

### PATENT DOCUMNET

Patent Document 1: Japanese Unexamined Patent Application Publicaion No. 2022-030627

### SUMMARY OF INVENTION

### TECHNICAL PROBLEM

Since the Rh-containing layer in Patent Document 1 contains the heat resistance components, it is advantageous in terms of heat resistance; however, since it does not contain Ce, which is a component having oxygen storage capacity (OSC), there is a problem in that the OSC is low and the exhaust gas purification performance is insufficient.

When Ce is contained in the Rh-containing layer in order to solve the above problem, the following problem arises. When the amount of Ce in the Rh-containing layer is increased and, correspondingly, the amount of the heat resistance components in the Rh-containing layer is decreased, the OSC of the Rh-containing layer is improved, but the heat resistance of the Rh-containing layer is reduced, and the exhaust gas purification performance of the Rh-containing layer (particularly the exhaust gas purification performance after exposure to a high-temperature environment) is reduced. Conversely, when the amount of the heat resistance components in the Rh-containing layer is increased and, correspondingly, the amount of Ce in the Rh-containing layer is decreased, the heat resistance of the Rh-containing layer is improved, but the OSC of the Rh-containing layer is reduced, and the exhaust gas purification performance of the Rh-containing layer is reduced. On the other hand, when both the amount of Ce and the amount of the heat resistance components in the Rh-containing layer are increased, it is possible to improve both the heat resistance and the OSC of the Rh-containing layer; however, the Rh-containing layer becomes thicker, and the contact between exhaust gas and a catalytically active component contained in a portion located below the Rh-containing layer deteriorates, so that the exhaust gas purification performance of the portion below the Rh-containing layer is reduced.

Therefore, in the conventional technology, it is difficult to achieve both improvement of the exhaust gas purification performance of the Rh-containing layer and improvement of the exhaust gas purification performance of a portion located below the Rh-containing layer.

Accordingly, an object of the present invention is to provide an exhaust gas purification catalyst capable of achieving both improvement of the exhaust gas purification performance of an Rh-containing layer and improvement of the exhaust gas purification performance of a portion located below the Rh-containing layer.

### SOLUTION TO PROBLEM

The present inventors have found that, in an exhaust gas purification catalyst including a substrate, a Pd-containing layer (first catalyst layer) provided on the substrate, and an Rh-containing layer provided on the Pd-containing layer, by dividing the Rh-containing layer into a lower layer (second catalyst layer) and an upper layer (third catalyst layer), increasing the Rh concentration in the third catalyst layer relative to the Rh concentration in the second catalyst layer, incorporating Ce into the second catalyst layer, incorporating Al and/or Zr into the third catalyst layer, adjusting the percentage of the mass of Ce in terms of CeO₂ in the second catalyst layer relative to the mass of the second catalyst layer to 7% by mass or more, adjusting the percentage of the mass of Ce in terms of CeO₂ in the third catalyst layer relative to the mass of the third catalyst layer to less than 7% by mass, and adjusting the average thickness of the third catalyst layer to 10 µm or less, it is possible to improve the contact between exhaust gas and Rh contained in the third catalyst layer, improve the heat resistance of the third catalyst layer, improve the OSC of the second catalyst layer, and improve the contact between exhaust gas and a catalytically active component contained in a portion located below the third catalyst layer; thus, it is possible to improve the exhaust gas purification performance of the second catalyst layer, improve the exhaust gas purification performance of the third catalyst layer, and improve the exhaust gas purification performance of the portion located below the third catalyst layer, thereby completing the present invention.

Specifically, the present invention provides the following exhaust gas purification catalysts.
(1) An exhaust gas purification catalyst including: a substrate; a first catalyst layer provided on the substrate; a second catalyst layer provided on the first catalyst layer; and a third catalyst layer provided on the second catalyst layer,
   wherein the first catalyst layer contains Pd,
   wherein the second catalyst layer contains Rh and Ce,
   wherein the third catalyst layer contains Rh and Al and/or Zr,
   wherein the second catalyst layer and the third catalyst layer satisfy the following formula: $" a " > " b " ,$
   wherein "a" represents a percentage of a mass of Rh in terms of metal in the third catalyst layer relative to a mass of the third catalyst layer, and "b" represents a percentage of a mass of Rh in terms of metal in the second catalyst layer relative to a mass of the second catalyst layer,
   wherein a percentage of a mass of Ce in terms of CeO₂ in the second catalyst layer relative to the mass of the second catalyst layer is 7% by mass or more,
   wherein a percentage of a mass of Ce in terms of CeO₂ in the third catalyst layer relative to the mass of the third catalyst layer is less than 7% by mass, and
   wherein an average thickness of the third catalyst layer is 10 µm or less.
(2) The exhaust gas purification catalyst according to (1), wherein a percentage of a total of a mass of Al in terms of Al₂O₃ in the third catalyst layer and a mass of Zr in terms of ZrO₂ in the third catalyst layer relative to the mass of the third catalyst layer is 80% by mass or more.
(3) The exhaust gas purification catalyst according to (1) or (2), wherein "a"/"b", which is a ratio of "a" to "b", is 2 or more and 10 or less.
(4) The exhaust gas purification catalyst according to (3), wherein "b" is 0.01% by mass or more and 5% by mass or less.
(5) The exhaust gas purification catalyst according to any one of (1) to (4), wherein the average thickness of the third catalyst layer is 0.5 µm or more and 5 µm or less.

### ADVANTAGEOUS EFFECT OF INVENTION

According to the present invention, there is provided an exhaust gas purification catalyst capable of achieving both improvement of the exhaust gas purification performance of an Rh-containing layer and improvement of the exhaust gas purification performance of a portion located below the Rh-containing layer.

### BRIEF DESCRIPTION OF DRAWINGS

FIG. 1 is a partial end view showing a state in which an exhaust gas purification catalyst according to one embodiment of the present invention is disposed in an exhaust gas passage of an internal combustion engine.
FIG. 2 is an end view taken along line A-A in FIG. 1.
FIG. 3 is an enlarged view of a region indicated by reference sign R in FIG. 2.
FIG. 4 is an end view taken along line B-B in FIG. 1.
FIG. 5 is a view showing a BED observation image of an exhaust gas purification catalyst of Comparative Example 2.
FIG. 6 is a view showing an element mapping image of the exhaust gas purification catalyst of Comparative Example 2.

### DETAILED DESCRIPTION OF INVENTION

### <<Descriptions of Terms>>

Hereinafter, terms used in the present specification will be described. The following descriptions apply throughout the present specification unless otherwise specified.

### <Abbreviations>

The term "SEM" refers to a scanning electron microscope; the term "EDX" refers to energy-dispersive X-ray spectroscopy; the term "SEM-EDX" refers to scanning electron microscopy-energy-dispersive X-ray analysis; the term "EPMA" refers to an electron probe microanalyzer; the term "XRF" refers to X-ray fluorescence analysis; the term "WDX" refers to wavelengthdispersive X-ray analysis; and the term "ICP-AES" refers to inductively coupled plasma atomic emission spectroscopy.

### <Metal Element>

The term "metal element" includes metalloid elements such as Si and B.

### <Rare Earth Element>

The term "rare earth element" includes Sc, Y, La, Ce, Pr, Nd, Pm, Sm, Eu, Gd, Tb, Dy, Ho, Er, Tm, Yb, and Lu.

### <Noble Metal Element>

The term "noble metal element" includes Pt, Pd, Rh, Ru, Os, Ir, Au, and Ag.

### <Oxide>

The term "oxide" has the following meanings. An oxide of a rare earth element other than Ce, Pr, and Tb refers to a sesquioxide (M₂O₃, where M represents a rare earth element other than Ce, Pr, and Tb); an oxide of Ce refers to CeO₂; an oxide of Pr refers to Pr₆O₁₁; an oxide of Tb refers to Tb₄O₇; an oxide of Al refers to Al₂O₃; an oxide of Zr refers to ZrO₂; an oxide of Si refers to SiO₂; an oxide of B refers to B₂O₃; an oxide of Cr refers to Cr₂O₃; an oxide of Mg refers to MgO; an oxide of Ca refers to CaO; an oxide of Sr refers to SrO; an oxide of Ba refers to BaO; an oxide of Fe refers to Fe₃O₄; an oxide of Mn refers to Mn₃O₄; an oxide of Ni refers to NiO; an oxide of Ti refers to TiO₂; an oxide of Zn refers to ZnO; and an oxide of Sn refers to SnO₂.

### <Mass of Metal Element in Terms of Metal>

The expression "mass of a metal element in terms of metal" refers to a mass of a metal composed of the metal element, determined on the assumption that the metal element exists as the metal.

### <Mass of Metal Element in Terms of Oxide>

The expression "mass of a metal element in terms of oxide" refers to a mass of an oxide of the metal element, determined on the assumption that the metal element exists as the oxide.

### <Mass of Catalyst Layer>

The expression "mass of a catalyst layer" refers to a total mass calculated by classifying all metal elements contained in the catalyst layer into noble metal elements and metal elements other than noble metal elements, determining masses of the noble metal elements in terms of metal, determining masses of the metal elements other than noble metal elements in terms of oxide, and totaling the determined masses. In other words, the expression "mass of a catalyst layer" refers to a calculated mass obtained by totalizing masses of noble metal elements contained in the catalyst layer in terms of metal and masses of metal elements other than noble metal elements contained in the catalyst layer in terms of oxide.

When information (for example, a composition and an amount) on raw materials used for producing a catalyst layer is known, a mass of the catalyst layer can be determined from the information on the raw materials used for producing the catalyst layer.

### <Content of Metal Element in Terms of Metal or Oxide in Catalyst Layer>

The expression "content of a metal element in terms of metal in a catalyst layer" is defined by the following formula: content of a metal element in terms of metal in a catalyst layer (% by mass) = (a mass of the metal element in terms of metal in the catalyst layer) / (a mass of the catalyst layer) × 100.

The expression "content of a metal element in terms of oxide in a catalyst layer" is defined by the following formula: content of a metal element in terms of oxide in a catalyst layer (% by mass) = (a mass of the metal element in terms of oxide in the catalyst layer) / (a mass of the catalyst layer) × 100.

When information (for example, a composition and an amount) on raw materials used for forming a catalyst layer is known, the content of a metal element in terms of metal or oxide in the catalyst layer (% by mass) can be determined from the information on the raw materials.

When information on raw materials used for forming a catalyst layer is not known, the content of a metal element in terms of metal or oxide in the catalyst layer (% by mass) can be determined by a conventional method such as SEM-EDX. Specifically, the determination is performed as follows.

Elemental analysis of the catalyst layer is performed using a conventional method such as SEM-EDX to identify the types of constituent elements of the catalyst layer and to determine the mole percentage of each metal element identified. For each of 10 fields of view in SEM, the mole percentage of each metal element is determined, and the average mole percentage of each metal element determined from the 10 fields of view is defined as the mole percentage of each metal element in the catalyst layer.

For each noble metal element in the catalyst layer, Value V is determined from the following formula: Value V for each noble metal element = (the mole percentage of each noble metal element in the catalyst layer) × (the molar mass of each noble metal element).

For each metal element other than noble metal elements in the catalyst layer, Value W is determined from the following formula: 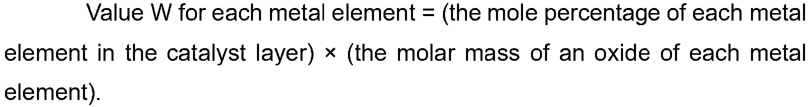 Value W for each metal element = (the mole percentage of each metal element in the catalyst layer) × (the molar mass of an oxide of each metal element).

The content of each noble metal element in terms of metal in the catalyst layer (% by mass) is determined from the following formula: 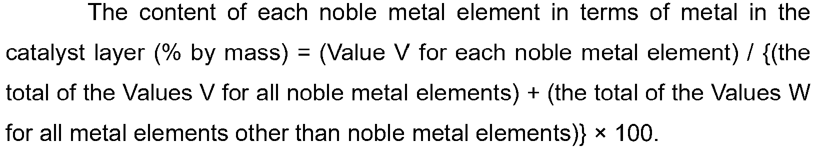 The content of each noble metal element in terms of metal in the catalyst layer (% by mass) = (Value V for each noble metal element) / {(the total of the Values V for all noble metal elements) + (the total of the Values W for all metal elements other than noble metal elements)} × 100.

The content of each metal element other than noble metal elements in terms of oxide in the catalyst layer (% by mass) is determined from the following formula: 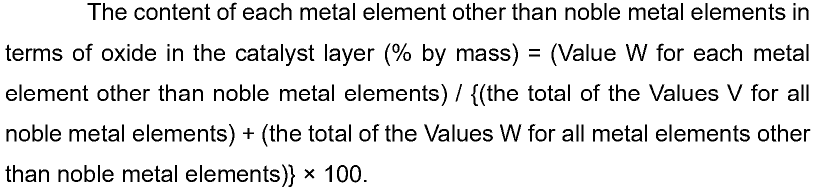 The content of each metal element other than noble metal elements in terms of oxide in the catalyst layer (% by mass) = (Value W for each metal element other than noble metal elements) / {(the total of the Values V for all noble metal elements) + (the total of the Values W for all metal elements other than noble metal elements)} × 100.

### <Metal Oxide>

The term "metal oxide" refers to an oxide containing one or more metal elements. Examples of the metal oxide include an Al-based oxide, a Ce-based oxide, a Zr-based oxide, and a Ce-Zr-based complex oxide.

### <Mass of Metal Oxide>

The expression "mass of a metal oxide" refers to a total mass of oxides of metal elements in the metal oxide, determined on the assumption that each of the metal elements exists as its oxide.

### <Content of Metal Element in Terms of Oxide in Metal Oxide>

The expression "content of a metal element in terms of oxide in a metal oxide" is defined by the following formula: content of a metal element in terms of oxide in a metal oxide (% by mass) = (a mass of the metal element in terms of oxide in the metal oxide) / (a mass of the metal oxide) × 100.

When a composition of a metal oxide is known, the content of a metal element in terms of oxide in the metal oxide (% by mass) can be determined from the composition of the metal oxide.

When a composition of a metal oxide is not known, the content of a metal element in terms of oxide in the metal oxide (% by mass) can be determined by a conventional method such as SEM-EDX. Specifically, the determination is performed as follows.

Elemental analysis of the metal oxide is performed using a conventional method such as SEM-EDX to identify the types of constituent elements of the metal oxide and to determine the content of each identified metal element in terms of oxide (% by mass).

### <Average Particle Diameter of Metal Oxide>

The expression "average particle diameter of a metal oxide" refers to an average value of the unidirectional particle diameters (Feret diameters) of 100 metal oxide particles, obtained by observing a sample containing the metal oxide with a scanning electron microscope and measuring the unidirectional particle diameters (Feret diameters) of 100 metal oxide particles arbitrarily selected from a field of view.

### <Al-based Oxide>

The term "Al-based oxide" refers to an oxide containing Al, wherein Al is the metal element with the highest mass-based content among metal elements constituting the oxide. However, it should be noted that an oxide falling within the scope of a Ce-Zr-based complex oxide is excluded from the scope of the Al-based oxide. The Ce-Zr-based complex oxide will be described later. The Al-based oxide is distinguished from alumina used as a binder. In the present specification, alumina used as a binder may be referred to as an "alumina binder".

The Al-based oxide is, for example, in particulate form. The Al-based oxide is used as a carrier for a catalytically active component. From the viewpoint of improving the supportability for a catalytically active component, the Al-based oxide is preferably porous.

The Al-based oxide has higher heat resistance. Therefore, when a catalyst layer contains the Al-based oxide, the heat resistance of the catalyst layer is improved, and the exhaust gas purification performance of the catalyst layer is improved.

The Al-based oxide may contain one or more metal elements other than Al and O (hereinafter referred to as "additional element M1"). The additional element M1 can be selected, for example, from rare earth elements (for example, Ce, Y, Pr, La, Nd, Sm, Eu, Gd, and the like), alkaline earth metal elements (for example, Mg, Ca, Sr, Ba, and the like), B, Si, Zr, Cr, and the like.

In the Al-based oxide, the additional element M1 may form a solid solution phase (for example, a solid solution phase of Al₂O₃ and an oxide of the additional element M1), may form a single phase (for example, an oxide phase of the additional element M1) that is a crystalline phase or an amorphous phase, or may form both a solid solution phase and a single phase. However, it is preferable that at least a part of the additional element M1 forms a solid solution phase.

Examples of the Al-based oxide include alumina (Al₂O₃), an oxide obtained by modifying a surface of alumina with the additional element M1, an oxide obtained by dissolving the additional element M1 in alumina, and the like. Examples of the Al-based oxide containing the additional element M1 include alumina-silica, alumina-zirconia, alumina-chromia, alumina-ceria, aluminalanthana, and the like.

From the viewpoint of improving the heat resistance of the Al-based oxide, a content of Al in terms of Al₂O₃ in the Al-based oxide is preferably 50% by mass or more, more preferably 75% by mass or more, and still more preferably 95% by mass or more, based on a mass of the Al-based oxide. The upper limit is 100% by mass.

### <Ce-based Oxide>

The term "Ce-based oxide" refers to an oxide containing Ce, wherein Ce is the metal element with the highest mass-based content among metal elements constituting the oxide. However, it should be noted that an oxide falling within the scope of a Ce-Zr-based complex oxide is excluded from the scope of the Ce-based oxide. The Ce-Zr-based complex oxide will be described later. The Ce-based oxide is distinguished from ceria used as a binder. In the present specification, ceria used as a binder may be referred to as a "ceria binder".

The Ce-based oxide is, for example, in particulate form. The Ce-based oxide is used as a carrier for a catalytically active component. From the viewpoint of improving the supportability for a catalytically active component, the Ce-based oxide is preferably porous.

The Ce-based oxide has OSC (an ability to store oxygen when an oxygen concentration in exhaust gas is high and to release oxygen when the oxygen concentration in the exhaust gas is low), and mitigates fluctuations in oxygen concentration in exhaust gas to expand an operating window of a catalytically active component. Therefore, when a catalyst layer contains the Ce-based oxide, the exhaust gas purification performance of the catalyst layer is improved.

The Ce-based oxide may contain one or more metal elements other than Ce and O (hereinafter referred to as "additional element M2"). The additional element M2 can be selected, for example, from rare earth elements other than Ce (for example, Y, Pr, La, Nd, Sm, Eu, Gd, and the like), alkaline earth metal elements (for example, Mg, Ca, Sr, Ba, and the like), Fe, Mn, Ni, Zr, Al, and the like.

In the Ce-based oxide, the additional element M2 may form a solid solution phase (for example, a solid solution phase of CeO₂ and an oxide of the additional element M2), may form a single phase (for example, an oxide phase of the additional element M2) that is a crystalline phase or an amorphous phase, or may form both a solid solution phase and a single phase. However, it is preferable that at least a part of the additional element M2 forms a solid solution phase.

Examples of the Ce-based oxide include ceria (CeO₂), an oxide obtained by modifying a surface of ceria with the additional element M2, an oxide obtained by dissolving the additional element M2 in ceria, and the like.

From the viewpoint of improving the OSC of the Ce-based oxide, a content of Ce in terms of CeO₂ in the Ce-based oxide is preferably 50% by mass or more, more preferably 70% by mass or more, and still more preferably 90% by mass or more, based on a mass of the Ce-based oxide. The upper limit is 100% by mass.

### <Zr-based oxide>

The term "Zr-based oxide" refers to an oxide containing Zr, wherein Zr is the metal element with the highest mass-based content among metal elements constituting the oxide. However, it should be noted that an oxide falling within the scope of a Ce-Zr-based complex oxide is excluded from the scope of the Zr-based oxide. The Ce-Zr-based complex oxide will be described later. The Zr-based oxide is distinguished from zirconia used as a binder. In the present specification, zirconia used as a binder may be referred to as a "zirconia binder".

The Zr-based oxide is, for example, in particulate form. The Zr-based oxide is used as a carrier for a catalytically active component. From the viewpoint of improving the supportability for a catalytically active component, the Zr-based oxide is preferably porous.

The Zr-based oxide has high heat resistance. Therefore, when a catalyst layer contains the Zr-based oxide, the heat resistance of the catalyst layer is improved, and the exhaust gas purification performance of the catalyst layer is improved.

The Zr-based oxide may contain one or more metal elements other than Zr and O (hereinafter referred to as "additional element M3"). The additional element M3 can be selected, for example, from rare earth elements (for example, Ce, Y, Pr, La, Nd, Sm, Eu, Gd, and the like), alkaline earth metal elements (for example, Mg, Ca, Sr, Ba, and the like), B, Si, Al, Cr, and the like.

In the Zr-based oxide, the additional element M3 may form a solid solution phase (for example, a solid solution phase of ZrO₂ and an oxide of the additional element M3), may form a single phase (for example, an oxide phase of the additional element M3) that is a crystalline phase or an amorphous phase, or may form both a solid solution phase and a single phase. However, it is preferable that at least a part of the additional element M3 forms a solid solution phase.

Examples of the Zr-based oxide include zirconia (ZrO₂), an oxide obtained by modifying a surface of zirconia with the additional element M3, an oxide obtained by dissolving the additional element M3 in zirconia, and the like.

From the viewpoint of improving the heat resistance of the Zr-based oxide, a content of Zr in terms of ZrO₂ in the Zr-based oxide is preferably 50% by mass or more, more preferably 65% by mass or more, and still more preferably 80% by mass or more, based on a mass of the Zr-based oxide. The upper limit is 100% by mass.

### <Ce-Zr-based complex oxide>

The term "Ce-Zr-based complex oxide" refers to a complex oxide containing Ce and Zr, wherein a content of Ce in terms of CeO₂ in the complex oxide is 5% by mass or more and 95% by mass or less based on a mass of the complex oxide, and a content of Zr in terms of ZrO₂ in the complex oxide is 5% by mass or more and 95% by mass or less based on the mass of the complex oxide.

The Ce-Zr-based complex oxide is, for example, in particulate form. The Ce-Zr-based complex oxide is used as a carrier for a catalytically active component. From the viewpoint of improving the supportability for a catalytically active component, the Ce-Zr-based complex oxide is preferably porous.

The Ce-Zr-based complex oxide has OSC and mitigates fluctuations in oxygen concentration in exhaust gas to expand an operating window of a catalytically active component. Therefore, when a catalyst layer contains the Ce-Zr-based complex oxide, the exhaust gas purification performance of the catalyst layer is improved.

The Ce-Zr-based complex oxide may contain one or more metal elements other than Ce, Zr and O (hereinafter referred to as "additional element M4"). The additional element M4 can be selected, for example, from rare earth elements other than Ce (for example, Y, Pr, La, Nd, Sm, Eu, Gd, and the like), alkaline earth metal elements (for example, Mg, Ca, Sr, Ba, and the like), Fe, Mn, Ni, Al, and the like.

In the Ce-Zr-based complex oxide, Ce may form a solid solution phase (for example, a solid solution phase of CeO₂ and ZrO₂), may form a single phase (for example, a single CeO₂ phase) that is a crystalline phase or an amorphous phase, or may form both a solid solution phase and a single phase. However, it is preferable that at least a part of Ce forms a solid solution phase.

In the Ce-Zr-based complex oxide, Zr may form a solid solution phase (for example, a solid solution phase of CeO₂ and ZrO₂), may form a single phase (for example, a single ZrO₂ phase) that is a crystalline phase or an amorphous phase, or may form both a solid solution phase and a single phase. However, it is preferable that at least a part of Zr forms a solid solution phase.

When the Ce-Zr-based complex oxide contains the additional element M4, the additional element M4 may form a solid solution phase (for example, a solid solution phase of CeO₂ and an oxide of the additional element M4, a solid solution phase of ZrO₂ and an oxide of the additional element M4, or a solid solution phase of CeO₂, ZrO₂, and an oxide of the additional element M4), may form a single phase (for example, a single oxide phase of the additional element M4) that is a crystalline phase or an amorphous phase, or may form both a solid solution phase and a single phase. However, it is preferable that at least a part of the additional element M4 forms a solid solution phase.

From the viewpoint of improving the OSC of the Ce-Zr-based complex oxide, the content of Ce in terms of CeO₂ in the Ce-Zr-based complex oxide is preferably 7% by mass or more, more preferably 10% by mass or more, and still more preferably 13% by mass or more, based on the mass of the Ce-Zr-based complex oxide. The upper limit can be appropriately adjusted in consideration of heat resistance, structural stability, contents of other components, and the like. The upper limit is preferably 70% by mass or less, more preferably 60% by mass or less, and still more preferably 50% by mass or less. Each of the above lower limits may be combined with any of the above upper limits.

From the viewpoint of improving the heat resistance of the Ce-Zr-based complex oxide, the content of Zr in terms of ZrO₂ in the Ce-Zr-based complex oxide is preferably 25% by mass or more, more preferably 30% by mass or more, and still more preferably 35% by mass or more, based on the mass of the Ce-Zr-based complex oxide. The upper limit can be appropriately adjusted in consideration of oxygen storage capacity, structural stability, contents of other components, and the like. The upper limit is preferably 80% by mass or less, more preferably 75% by mass or less, and still more preferably 70% by mass or less. Each of the above lower limits may be combined with any of the above upper limits.

From the viewpoint of improving the heat resistance and the OSC of the Ce-Zr-based complex oxide, a total of the content of Ce in terms of CeO₂ and the content of Zr in terms of ZrO₂ in the Ce-Zr-based complex oxide is preferably 50% by mass or more, more preferably 65% by mass or more, and still more preferably 80% by mass or more, based on the mass of the Ce-Zr-based complex oxide. The upper limit is 100% by mass.

From the viewpoint of improving the heat resistance of the Ce-Zr-based complex oxide, the Ce-Zr-based complex oxide preferably contains one or more rare earth elements. The rare earth element can be selected, for example, from Y, Pr, La, Nd, Sm, Eu, Gd, and the like.

From the viewpoint of improving the heat resistance of the Ce-Zr-based complex oxide, a content of a rare earth element in terms of oxide in the Ce-Zr-based complex oxide is preferably 5% by mass or more and 30% by mass or less, more preferably 7% by mass or more and 25% by mass or less, and still more preferably 9% by mass or more and 20% by mass or less, based on the mass of the Ce-Zr-based complex oxide. Each of the above lower limits may be combined with any of the above upper limits. The "content of a rare earth element in terms of oxide in the Ce-Zr-based complex oxide" refers to, when the Ce-Zr-based complex oxide contains one rare earth element, a content of the one rare earth element in terms of oxide, and when the Ce-Zr-based complex oxide contains two or more rare earth elements, a total content of the two or more rare earth elements in terms of oxide.

### <<Exhaust Gas Purification Catalyst>>

Hereinafter, the exhaust gas purification catalyst of the present invention will be described.

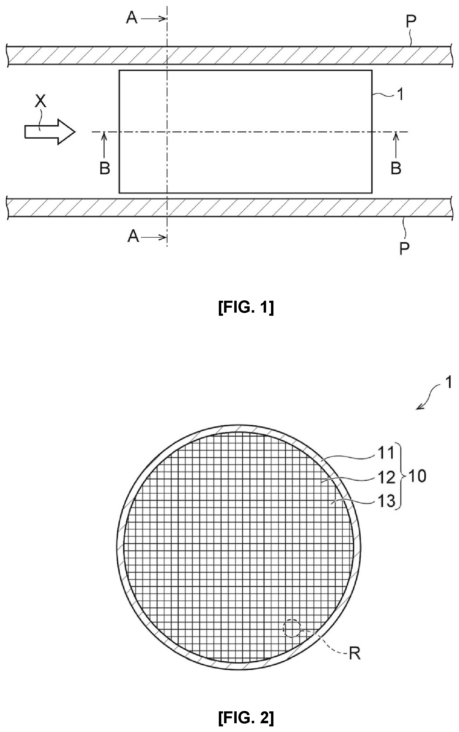

Hereinafter, an exhaust gas purification catalyst 1 (hereinafter referred to as "catalyst 1") according to one embodiment of the present invention will be described with reference to FIGS. 1 to 4.

As shown in FIG. 1, the catalyst 1 is disposed in an exhaust gas passage in an exhaust pipe P of an internal combustion engine. The internal combustion engine is, for example, a gasoline engine or the like. Exhaust gas emitted from the internal combustion engine flows through the exhaust gas passage in the exhaust pipe P from one end toward the other end, and is purified by the catalyst 1 provided in the exhaust pipe P. In the drawings, an exhaust gas flow direction is indicated by reference sign X. In the present specification, an upstream side in the exhaust gas flow direction X may be referred to as an "exhaust gas inflow side" or an "upstream side", and a downstream side in the exhaust gas flow direction X may be referred to as an "exhaust gas outflow side" or a "downstream side".

In the exhaust gas passage in the exhaust pipe P, another exhaust gas purification catalyst may be disposed on an upstream side and/or a downstream side of the catalyst 1.

As shown in FIGS. 2 to 4, the catalyst 1 includes a substrate 10, a first catalyst layer 20 provided on the substrate 10, a second catalyst layer 30 provided on the first catalyst layer 20, and a third catalyst layer 40 provided on the second catalyst layer 30.

The catalyst 1 is characterized in that:
the first catalyst layer 20 contains Pd;
the second catalyst layer 30 contains Rh and Ce;
the third catalyst layer 40 contains Rh and Al and/or Zr;
the second catalyst layer 30 and the third catalyst layer 40 satisfy the following formula: $" a " > " b "$
wherein "a" represents a percentage of a mass of Rh in terms of metal in the third catalyst layer 40 relative to a mass of the third catalyst layer 40, and "b" represents a percentage of a mass of Rh in terms of metal in the second catalyst layer 30 relative to a mass of the second catalyst layer 30;
a percentage of a mass of Ce in terms of CeO₂ in the second catalyst layer 30 relative to the mass of the second catalyst layer 30 is 7% by mass or more;
a percentage of a mass of Ce in terms of CeO₂ in the third catalyst layer 40 relative to the mass of the third catalyst layer 40 is less than 7% by mass; and
an average thickness of the third catalyst layer 40 is 10 µm or less.

Hereinafter, effects of the catalyst 1 will be described.

The second catalyst layer 30 and the third catalyst layer 40 provided on the second catalyst layer 30 satisfy the following formula: "a" > "b". Accordingly, the catalyst 1 can achieve improvement of the contact between exhaust gas and Rh contained in the third catalyst layer 40, thereby achieving improvement of the exhaust gas purification performance of the third catalyst layer 40.

From the viewpoint of more effectively achieving improvement of the contact between exhaust gas and Rh contained in the third catalyst layer 40, "a"/"b", which a ratio of "a" to "b", is preferably 2 or more and 10 or less, more preferably 3 or more and 6 or less, and still more preferably 4 or more and 6 or less. Each of the above lower limits may be combined with any of the above upper limits.

The third catalyst layer 40 contains Al and/or Zr, and the percentage of the mass of Ce in terms of CeO₂ in the third catalyst layer 40 relative to the mass of the third catalyst layer 40 is less than 7% by mass. Accordingly, the catalyst 1 can achieve improvement of the heat resistance of the third catalyst layer 40, thereby achieving improvement of the exhaust gas purification performance of the third catalyst layer 40 (in particular, the exhaust gas purification performance of the third catalyst layer 40 after exposure to a high-temperature environment).

The second catalyst layer 30 contains Ce, and the percentage of the mass of Ce in terms of CeO₂ in the second catalyst layer 30 relative to the mass of the second catalyst layer 30 is 7% by mass or more. Accordingly, the catalyst 1 can achieve improvement of the OSC of the second catalyst layer 30, thereby achieving improvement of the exhaust gas purification performance of the second catalyst layer 30.

The average thickness of the third catalyst layer 40 is 10 µm or less. Accordingly, the catalyst 1 can achieve improvement of the contact between exhaust gas and a catalytically active component contained in a portion located below the third catalyst layer 40 (for example, Pd contained in the first catalyst layer 20 and Rh contained in the second catalyst layer 30), thereby achieving improvement of the exhaust gas purification performance of the first catalyst layer 20 and the second catalyst layer 30.

As described above, the catalyst 1 can achieve improvement of the contact between exhaust gas and Rh contained in the third catalyst layer 40, improvement of the heat resistance of the third catalyst layer 40, improvement of the OSC of the second catalyst layer 30, and improvement of the contact between exhaust gas and a catalytically active component contained in a portion located below the third catalyst layer 40, and by these effects in combination, excellent exhaust gas purification performance can be exhibited.

### <Substrate>

Hereinafter, the substrate 10 will be described.

A material constituting the substrate 10 can be appropriately selected from known materials. Examples of the material constituting the substrate 10 include a ceramic material and a metal material, and a ceramic material is preferable. Examples of the ceramic material include carbide ceramics such as silicon carbide, titanium carbide, tantalum carbide, and tungsten carbide; nitride ceramics such as aluminum nitride, silicon nitride, boron nitride, and titanium nitride; and oxide ceramics such as alumina, zirconia, cordierite, mullite, zircon, aluminum titanate, and magnesium titanate. Examples of the metal material include alloys such as stainless steel.

As shown in FIGS. 2 to 4, the substrate 10 includes a tubular member 11, a partition wall 12 provided inside the tubular member 11, and cells 13 separated from each other by the partition wall 12. The substrate 10 preferably has a honeycomb structure.

As shown in FIG. 2, the tubular member 11 defines the external shape of the substrate 10, and the axial direction of the tubular member 11 coincides with the axis direction of the substrate 10. As shown in FIG. 2, the tubular member 11 has a hollow cylindrical shape, but it may have another shape such as a hollow elliptic cylindrical shape or a polygonal tubular shape.

As shown in FIGS. 2 to 4, the partition wall 12 is present between adjacent cells 13, whereby the adjacent cells 13 are separated from each other by the partition wall 12. The partition wall 12 may have a porous structure that allows exhaust gas to pass through. A thickness of the partition wall 12 is, for example, 20 µm or more and 1500 µm or less.

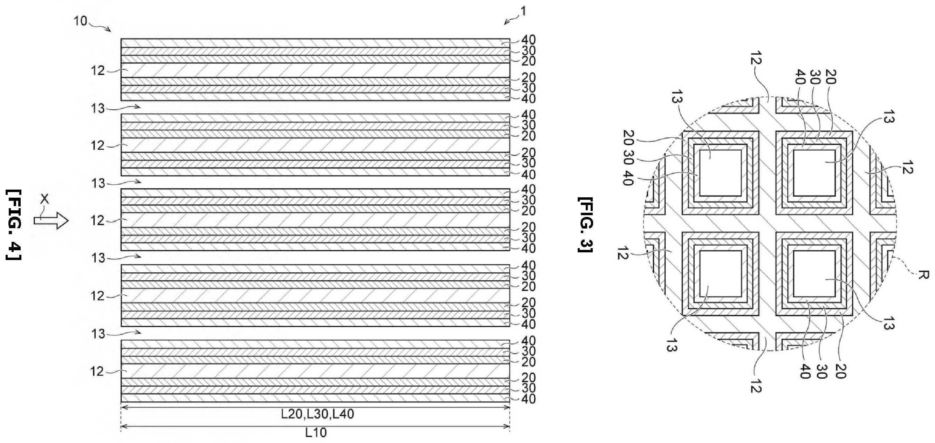

As shown in FIG. 4, each cell 13 extends in the exhaust gas flow direction X and has an end on the exhaust gas inflow side and an end on the exhaust gas outflow side.

As shown in FIG. 4, both the end on the exhaust gas inflow side and the end on the exhaust gas outflow side of each cell 13 are open. Therefore, exhaust gas flows in from the end (opening) on the exhaust gas inflow side of each cell 13 and flows out from the end (opening) on the exhaust gas outflow side of each cell 13. Such a configuration is called a flow-through type.

As shown in FIGS. 2 and 3, the shape in a plan view of the end (opening) on the exhaust gas inflow side of each cell 13 is a rectangle, but may be another shape such as a hexagon or an octagon. The same applies to the shape in a plan view of the end (opening) on the exhaust gas outflow side of each cell 13.

A cell density per square inch of the substrate 10 is, for example, 100 cells or more and 1200 cells or less. The cell density per square inch of the substrate 10 refers to the total number of cells 13 per square inch in a cross section obtained by cutting the substrate 10 along a plane perpendicular to the exhaust gas flow direction X.

A volume of the substrate 10 is, for example, 0.1 L or more and 20 L or less. The volume of the substrate 10 refers to the apparent volume of the substrate 10. For example, when the substrate 10 is in the form of a cylinder, the outer diameter of the substrate 10 is 2r, and the length of the substrate 10 is L10, the volume of the substrate 10 is represented by the following formula: the volume of the substrate 10 = π × r² × L10. In the present specification, the term "length" refers to the dimension in the axial direction of the substrate 10 unless otherwise specified.

### <First Catalyst Layer>

Hereinafter, the first catalyst layer 20 will be described.

As shown in FIGS. 3 and 4, the first catalyst layer 20 is provided on the substrate 10. Specifically, the first catalyst layer 20 is provided on a surface on the cell 13 side of the partition wall 12. The expression "surface on the cell 13 side of the partition wall 12" refers to an outer surface of the partition wall 12, the outer surface extending in the exhaust gas flow direction X and being in contact with the cell 13. The first catalyst layer 20 may be provided directly or via another layer on the surface on the cell 13 side of the partition wall 12, but is usually provided directly on the surface on the cell 13 side of the partition wall 12. The expression "first catalyst layer 20 provided on the substrate 10" includes both an embodiment wherein the first catalyst layer 20 is provided directly on the surface on the cell 13 side of the partition wall 12 and an embodiment wherein the first catalyst layer 20 is provided via another layer on the surface on the cell 13 side of the partition wall 12.

The first catalyst layer 20 may be composed of a structure raised from the surface on the cell 13 side of the partition wall 12 toward the cell 13 side (hereinafter referred to as a "raised structure"), or may be composed of a structure existing inside the partition wall 12 (hereinafter referred to as an "internal structure"), or may have both the raised structure and the internal structure. The expression "first catalyst layer 20 provided on the substrate 10" includes an embodiment wherein the first catalyst layer 20 is composed of the raised structure, an embodiment wherein the first catalyst layer 20 is composed of the internal structure, and an embodiment wherein the first catalyst layer 20 has both the raised structure and the internal structure.

As shown in FIG. 4, the first catalyst layer 20 extends along the exhaust gas flow direction X from the end on the exhaust gas inflow side of the partition wall 12 to the end on the exhaust gas outflow side of the partition wall 12. The first catalyst layer 20 may extend along the exhaust gas flow direction X from the end on the exhaust gas inflow side of the partition wall 12 so as not to reach the end on the exhaust gas outflow side of the partition wall 12, or may extend along a direction opposite to the exhaust gas flow direction X from the end on the exhaust gas outflow side of the partition wall 12 so as not to reach the end on the exhaust gas inflow side of the partition wall 12.

From the viewpoint of achieving a good balance between the exhaust gas purification performance and the cost, a mass of the first catalyst layer 20 per unit volume of a portion of the substrate 10 on which the first catalyst layer 20 is formed is preferably 50 g/L or more and 160 g/L or less, more preferably 60 g/L or more and 140 g/L or less, and still more preferably 70 g/L or more and 120 g/L or less. Each of the above lower limits may be combined with any of the above upper limits.

The mass of the first catalyst layer 20 per unit volume of the portion of the substrate 10 on which the first catalyst layer 20 is formed is calculated by the following formula: (the mass of the first catalyst layer 20) / ((the volume of the substrate 10) × (the average length L20 of the first catalyst layer 20 / the length L10 of the substrate 10)).

An example of the method for measuring the average length L20 of the first catalyst layer 20 is as follows.

A sample extending in the axial direction of the substrate 10 and having the same length as the length L10 of the substrate 10 is cut out from the catalyst 1. The sample is, for example, in the form of a cylinder with a diameter of 25.4 mm. The diameter of the sample can be changed as necessary. When the first catalyst layer 20 extends along the exhaust gas flow direction X from the end on the exhaust gas inflow side of the partition wall 12, the sample is cut at 5 mm intervals along planes perpendicular to the axial direction of the substrate 10 to obtain cut pieces, which are referred to as the first cut piece, the second cut piece and so on up to the n-th cut piece, sequentially from the end on the exhaust gas inflow side of the sample. When the first catalyst layer 20 extends along a direction opposite to the exhaust gas flow direction X from the end on the exhaust gas outflow side of the partition wall 12, the sample is cut at 5 mm intervals along planes perpendicular to the axial direction of the substrate 10 to obtain cut pieces, which are referred to as the first cut piece, the second cut piece and so on up to the n-th cut piece, sequentially from the end on the exhaust gas outflow side of the sample. In either case, the length of each cut piece is 5 mm. The composition of each cut piece is analyzed using XRF (e.g., EDX, WDX, or the like), ICP-AES, SEM-EDX, or the like, and based on the composition of each cut piece, it is confirmed whether or not each cut piece includes a part of the first catalyst layer 20.

For a cut piece that apparently includes a part of the first catalyst layer 20, it is not necessarily required to perform the compositional analysis. For example, it is possible to confirm whether or not each cut piece includes a part of the first catalyst layer 20 by observing a cross section thereof using SEM, EPMA, or the like. When observing the cross section, elemental mapping of the cross section may be performed.

After confirming whether or not each cut piece includes a part of the first catalyst layer 20, the length of the first catalyst layer 20 included in the sample is calculated based on the following formula: 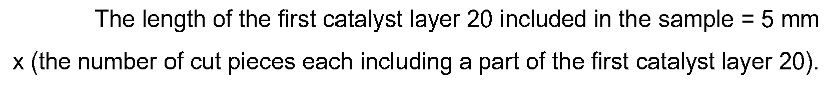 The length of the first catalyst layer 20 included in the sample = 5 mm x (the number of cut pieces each including a part of the first catalyst layer 20).

For example, when each of the first cut piece to the k-th cut piece includes a part of the first catalyst layer 20, whereas each of the (k+1)-th to n-th cut pieces does not include a part of the first catalyst layer 20, the length of the first catalyst layer 20 included in the sample is (5 × k) mm.

An example of the method for more specifically measuring the length of the first catalyst layer 20 included in the sample is as follows.

The k-th cut piece is cut along the axial direction of the substrate 10, and a part of the first catalyst layer 20 existing in the resulting cross section is observed using SEM, EPMA, or the like, to measure the length of the part of the first catalyst layer 20 included in the k-th cut piece. Then, the length of the first catalyst layer 20 included in the sample is calculated based on the following formula: 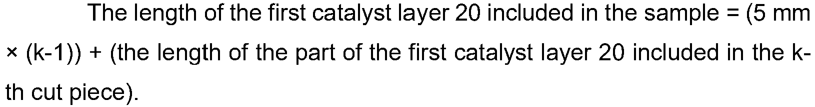 The length of the first catalyst layer 20 included in the sample = (5 mm × (k-1)) + (the length of the part of the first catalyst layer 20 included in the k-th cut piece).

When the first catalyst layer 20 extends along the exhaust gas flow direction X from the end on the exhaust gas inflow side of the partition wall 12, the k-th cut piece is the cut piece obtained from the position closest to the end on the exhaust gas outflow side of the sample among the cut pieces each including a part of the first catalyst layer 20. When the first catalyst layer 20 extends along a direction opposite to the exhaust gas flow direction X from the end on the exhaust gas outflow side of the partition wall 12, the k-th cut piece is the cut piece obtained from the position closest to the end on the exhaust gas inflow side of the sample among the cut pieces each including a part of the first catalyst layer 20.

For 8 to 16 samples arbitrarily cut out from the catalyst 1, the length of the first catalyst layer 20 included in each sample is measured, and the average value of the measured lengths is defined as the average length L20 of the first catalyst layer 20.

The first catalyst layer 20 contains Pd as a catalytically active component. Pd is contained in the first catalyst layer 20 in a form capable of functioning as a catalytically active component, for example, in a form of a catalytically active component containing Pd, such as metallic Pd, an alloy containing Pd, or a compound containing Pd (for example, an oxide of Pd). From the viewpoint of improving the exhaust gas purification performance, the catalytically active component containing Pd is preferably in particulate form.

From the viewpoint of achieving a good balance between the exhaust gas purification performance and the cost, a percentage of a mass of Pd in terms of metal in the first catalyst layer 20 relative to the mass of the first catalyst layer 20 (in the present specification, referred to as the "content of Pd in terms of metal in the first catalyst layer 20") is preferably 0.1% by mass or more and 10% by mass or less, more preferably 0.2% by mass or more and 7% by mass or less, and still more preferably 0.3% by mass or more and 5% by mass or less. Each of the above lower limits may be combined with any of the above upper limits.

The first catalyst layer 20 may contain one or more noble metal elements other than Pd as catalytically active components. The noble metal element other than Pd can be selected, for example, from Pt, Rh, Ru, Os, Ir, Au, Ag, and the like. The noble metal element other than Pd is contained in the first catalyst layer 20 in a form capable of functioning as a catalytically active component, for example, in a form of a catalytically active component containing the noble metal element other than Pd, such as a metal, an alloy containing the noble metal element, or a compound containing the noble metal element (for example, an oxide of the noble metal element). From the viewpoint of improving the exhaust gas purification performance, the catalytically active component containing the noble metal element other than Pd is preferably in particulate form.

When the first catalyst layer 20 contains Pd and a noble metal element other than Pd, Pd and the noble metal element other than Pd may form an alloy, which may reduce active sites of Pd involved in exhaust gas purification performance. Therefore, it is preferable that a percentage of a mass of a noble metal element other than Pd in terms of metal in the first catalyst layer 20 relative to the mass of the first catalyst layer 20 (in the present specification, referred to as the "content of a noble metal element other than Pd in terms of metal in the first catalyst layer 20") is small. Specifically, the content of a noble metal element other than Pd in terms of metal in the first catalyst layer 20 is preferably 0.05% by mass or less, more preferably 0.03% by mass or less, and still more preferably 0.01% by mass or less. The lower limit is 0% by mass. The "content of a noble metal element other than Pd in terms of metal in the first catalyst layer 20" refers to, when the first catalyst layer 20 contains one noble metal element other than Pd, a content of the one noble metal element in terms of metal, and when the first catalyst layer 20 contains two or more noble metal elements other than Pd, a total content of the two or more noble metal elements in terms of metal.

It is preferable that the first catalyst layer 20 contains one or more carriers, and that at least a part of a catalytically active component is supported on the one or more carriers.

The expression "at least a part of a catalytically active component is supported on a carrier" refers to a state in which at least a part of the catalytically active component is physically or chemically adsorbed or retained on an outer surface of the carrier and/or an inner surface of pores of the carrier. This definition applies to any catalyst layer (that is, the first catalyst layer 20, the second catalyst layer 30, and the third catalyst layer 40).

For a given catalyst layer, whether at least a part of a catalytically active component is supported on a carrier can be confirmed, for example, using SEM-EDX or the like. Specifically, when an elemental mapping obtained by analyzing a cross section of the catalyst layer using SEM-EDX shows that at least a part of a catalytically active component and a carrier are present in the same region, it can be determined that at least a part of the catalytically active component is supported on the carrier.

The carrier can be selected, for example, from a metal oxide. The metal oxide is, for example, in particulate form. From the viewpoint of improving the supportability for a catalytically active component, the metal oxide is preferably porous. The metal oxide may have OSC or may not have OSC. The metal oxide used as a carrier is distinguished from a metal oxide used as a binder (for example, a metal oxide-based binder such as an alumina binder, a zirconia binder, a titania binder, or a silica binder).

Examples of the metal oxide include an Al-based oxide, a Ce-based oxide, a Zr-based oxide, a Ce-Zr-based complex oxide, an oxide of a rare earth element other than Ce, silica (SiO₂), titania (TiO₂), zeolite (aluminosilicate), and an oxide based on MgO, ZnO, SnO₂, or the like.

From the viewpoint of improving the heat resistance and/or the OSC of the first catalyst layer 20 and thereby improving the exhaust gas purification performance of the first catalyst layer 20, the carrier is preferably selected from an Al-based oxide, a Ce-based oxide, and a Ce-Zr-based complex oxide, and more preferably selected from an Al-based oxide and a Ce-Zr-based complex oxide. In one embodiment, the first catalyst layer 20 contains an Al-based oxide and a Ce-Zr-based complex oxide as carriers.

From the viewpoint of improving the OSC of the first catalyst layer 20 and thereby improving the exhaust gas purification performance of the first catalyst layer 20, the first catalyst layer 20 preferably contains Ce.

From the viewpoint of improving the OSC of the first catalyst layer 20 and thereby improving the exhaust gas purification performance of the first catalyst layer 20, a percentage of a mass of Ce in terms of CeO₂ in the first catalyst layer 20 relative to the mass of the first catalyst layer 20 (in the present specification, referred to as the "content of Ce in terms of CeO₂ in the first catalyst layer 20") is preferably 3% by mass or more, more preferably 5% by mass or more, and still more preferably 10% by mass or more. The upper limit can be appropriately adjusted in consideration of a balance with cost, contents of other components, and the like. The upper limit is preferably 45% by mass or less, more preferably 40% by mass or less, and still more preferably 35% by mass or less. Each of the above lower limits may be combined with any of the above upper limits.

For a given catalyst layer, the "content of Ce in terms of CeO₂ in the catalyst layer" refers to, when the catalyst layer contains one Ce source, a content of Ce in terms of CeO₂ derived from the one Ce source, and when the catalyst layer contains two or more Ce sources, a total content of Ce in terms of CeO₂ derived from the two or more Ce sources. This definition applies to any catalyst layer (that is, the first catalyst layer 20, the second catalyst layer 30, and the third catalyst layer 40).

When the first catalyst layer 20 contains Ce, the first catalyst layer 20 contains one or more Ce sources.

Examples of the Ce source include an oxide containing Ce. Examples of the oxide containing Ce include an Al-based oxide containing Ce, a Ce-based oxide, a Zr-based oxide containing Ce, a Ce-Zr-based complex oxide, a ceria binder, and the like.

From the viewpoint of improving the heat resistance and/or the OSC of the first catalyst layer 20 and thereby improving the exhaust gas purification performance of the first catalyst layer 20, the first catalyst layer 20 preferably contains a Ce-Zr-based complex oxide as a Ce source. The first catalyst layer 20 may contain, in addition to the Ce-Zr-based complex oxide, one or more other Ce sources.

From the viewpoint of improving the heat resistance and/or the OSC of the first catalyst layer 20 and thereby improving the exhaust gas purification performance of the first catalyst layer 20, a percentage of a mass of the Ce-Zr-based complex oxide in the first catalyst layer 20 relative to the mass of the first catalyst layer 20 (in the present specification, referred to as the "content of the Ce-Zr-based complex oxide in the first catalyst layer 20") is preferably 10% by mass or more, more preferably 15% by mass or more, and still more preferably 20% by mass or more. The upper limit can be appropriately adjusted in consideration of a balance with cost, contents of other components, and the like. The upper limit is preferably 80% by mass or less, more preferably 75% by mass or less, and still more preferably 70% by mass or less. Each of the above lower limits may be combined with any of the above upper limits.

When information (for example, a composition and an amount) on raw materials used for forming the first catalyst layer 20 is known, the content of the Ce-Zr-based complex oxide in the first catalyst layer 20 can be determined from the information on the raw materials used for forming the first catalyst layer 20.

When information on raw materials used for forming the first catalyst layer 20 is not known, the content of the Ce-Zr-based complex oxide in the first catalyst layer 20 can be determined by a conventional method such as SEM-EDX. Specifically, the determination is performed as follows.
(1) For a sample obtained from the first catalyst layer 20, elemental analysis is performed using a conventional method such as SEM-EDX to identify the types of constituent elements in the entire sample and to determine the content (% by mass) of each identified metal element in terms of oxide.
(2) For a sample obtained from the first catalyst layer 20, elemental mapping is performed using a conventional method such as SEM-EDX to identify the types of particles contained in the sample (for example, an Al-based oxide, a Ce-based oxide, a Ce-Zr-based complex oxide, and the like).
(3) For each type of particle, elemental analysis is performed using SEM-EDX on a plurality of particles arbitrarily selected (for example, 50 particles) to identify the types of constituent elements of the particles and to determine the content (% by mass) of each identified metal element in terms of oxide. For each type of particle, the average value of the content (% by mass) of each identified metal element in terms of oxide is calculated, and the average value is defined as the content (% by mass) of each identified metal element in terms of oxide in each type of particle.
(4) By creating and solving equations representing relationships among the content (% by mass) of each identified metal element in terms of oxide in the sample, the content (% by mass) of each identified metal element in terms of oxide in each type of particle, and the content (% by mass) of each type of particle in the sample, the content (% by mass) of each type of particle in the sample is calculated, and the calculated value is defined as the content (% by mass) of each type of particle in the first catalyst layer 20.

From the viewpoint of improving the heat resistance and/or the OSC of the first catalyst layer 20 and thereby improving the exhaust gas purification performance of the first catalyst layer 20, a percentage of a mass of Ce in terms of CeO₂ derived from the Ce-Zr-based complex oxide relative to the mass of Ce in terms of CeO₂ in the first catalyst layer 20 is preferably 80% by mass or more, more preferably 85% by mass or more, and still more preferably 90% by mass or more. The upper limit is 100% by mass.

When the first catalyst layer 20 contains a Ce-Zr-based complex oxide, the average particle diameter of the Ce-Zr-based complex oxide contained in the first catalyst layer 20 is preferably 2 µm or more and 20 µm or less, and more preferably 5 µm or more and 15 µm or less. Each of the above lower limits may be combined with any of the above upper limits.

From the viewpoint of improving the heat resistance of the first catalyst layer 20 and thereby improving the exhaust gas purification performance of the first catalyst layer 20, the first catalyst layer 20 preferably contains Al and/or Zr.

From the viewpoint of improving the heat resistance of the first catalyst layer 20 and thereby improving the exhaust gas purification performance of the first catalyst layer 20, a percentage of a total of a mass of Al in terms of Al₂O₃ in the first catalyst layer 20 and a mass of Zr in terms of ZrO₂ in the first catalyst layer 20 relative to the mass of the first catalyst layer 20 is preferably 30% by mass or more, more preferably 35% by mass or more, and still more preferably 40% by mass or more. The upper limit can be appropriately adjusted in consideration of a balance with cost and contents of other components. The upper limit is preferably 80% by mass or less, more preferably 78% by mass or less, and still more preferably 76% by mass or less. Each of the above lower limits may be combined with any of the above upper limits.

From the viewpoint of improving the heat resistance of the first catalyst layer 20 and thereby improving the exhaust gas purification performance of the first catalyst layer 20, a percentage of the mass of Al in terms of Al₂O₃ in the first catalyst layer 20 relative to the mass of the first catalyst layer 20 (in the present specification, referred to as the "content of Al in terms of Al₂O₃ in the first catalyst layer 20") is preferably 15% by mass or more, more preferably 20% by mass or more, and still more preferably 25% by mass or more. The upper limit can be appropriately adjusted in consideration of a balance with cost, contents of other components, and the like. The upper limit is preferably 75% by mass or less, more preferably 70% by mass or less, and still more preferably 65% by mass or less. Each of the above lower limits may be combined with any of the above upper limits.

For a given catalyst layer, the "content of Al in terms of Al₂O₃ in the catalyst layer" refers to, when the catalyst layer contains one Al source, a content of Al in terms of Al₂O₃ derived from the one Al source, and when the catalyst layer contains two or more Al sources, a total content of Al in terms of Al₂O₃ derived from the two or more Al sources. This definition applies to any catalyst layer (that is, the first catalyst layer 20, the second catalyst layer 30, and the third catalyst layer 40).

When the first catalyst layer 20 contains Al, the first catalyst layer 20 contains one or more Al sources.

Examples of the Al source include an oxide containing Al. Examples of the oxide containing Al include an Al-based oxide, a Ce-based oxide containing Al, a Zr-based oxide containing Al, a Ce-Zr-based complex oxide containing Al, an alumina binder, and the like.

From the viewpoint of improving the heat resistance of the first catalyst layer 20 and thereby improving the exhaust gas purification performance of the first catalyst layer 20, the first catalyst layer 20 preferably contains an Al-based oxide as an Al source. The first catalyst layer 20 may contain, in addition to the Al-based oxide, one or more other Al sources.

From the viewpoint of improving the heat resistance of the first catalyst layer 20 and thereby improving the exhaust gas purification performance of the first catalyst layer 20, a percentage of a mass of the Al-based oxide in the first catalyst layer 20 relative to the mass of the first catalyst layer 20 (in the present specification, referred to as the "content of the Al-based oxide in the first catalyst layer 20") is preferably 10% by mass or more, more preferably 15% by mass or more, and still more preferably 20% by mass or more. The upper limit can be appropriately adjusted in consideration of a balance with cost, contents of other components, and the like. The upper limit is preferably 70% by mass or less, more preferably 65% by mass or less, and still more preferably 60% by mass or less. Each of the above lower limits may be combined with any of the above upper limits.

The content of the Al-based oxide in the first catalyst layer 20 can be determined in the same manner as the content of the Ce-Zr-based complex oxide in the first catalyst layer 20.

From the viewpoint of improving the heat resistance of the first catalyst layer 20 and thereby improving the exhaust gas purification performance of the first catalyst layer 20, a percentage of a mass of Al in terms of Al₂O₃ derived from the Al-based oxide relative to the mass of Al in terms of Al₂O₃ in the first catalyst layer 20 is preferably 80% by mass or more, more preferably 85% by mass or more, and still more preferably 90% by mass or more. The upper limit is 100% by mass.

When the first catalyst layer 20 contains an Al-based oxide, the average particle diameter of the Al-based oxide contained in the first catalyst layer 20 is preferably 3 µm or more and 20 µm or less, and more preferably 5 µm or more and 15 µm or less. Each of the above lower limits may be combined with any of the above upper limits.

From the viewpoint of improving the heat resistance of the first catalyst layer 20 and thereby improving the exhaust gas purification performance of the first catalyst layer 20, a percentage of the mass of Zr in terms of ZrO₂ in the first catalyst layer 20 relative to the mass of the first catalyst layer 20 (in the present specification, referred to as the "content of Zr in terms of ZrO₂ in the first catalyst layer 20") is preferably 5% by mass or more, more preferably 7% by mass or more, and still more preferably 10% by mass or more. The upper limit can be appropriately adjusted in consideration of a balance with cost, contents of other components, and the like. The upper limit is preferably 40% by mass or less, more preferably 35% by mass or less, and still more preferably 30% by mass or less. Each of the above lower limits may be combined with any of the above upper limits.

For a given catalyst layer, the "content of Zr in terms of ZrO₂ in the catalyst layer" refers to, when the catalyst layer contains one Zr source, a content of Zr in terms of ZrO₂ derived from the one Zr source, and when the catalyst layer contains two or more Zr sources, a total content of Zr in terms of ZrO₂ derived from the two or more Zr sources. This definition applies to any catalyst layer (that is, the first catalyst layer 20, the second catalyst layer 30, and the third catalyst layer 40).

When the first catalyst layer 20 contains Zr, the first catalyst layer 20 contains one or more Zr sources.

Examples of the Zr source include an oxide containing Zr. Examples of the oxide containing Zr include an Al-based oxide containing Zr, a Ce-based oxide containing Zr, a Zr-based oxide, a Ce-Zr-based complex oxide, a zirconia binder, and the like.

From the viewpoint of improving the heat resistance and the OSC of the first catalyst layer 20 and thereby improving the exhaust gas purification performance of the first catalyst layer 20, the first catalyst layer 20 preferably contains a Ce-Zr-based complex oxide as a Zr source. The first catalyst layer 20 may contain, in addition to the Ce-Zr-based complex oxide, one or more other Zr sources.

The description regarding the content of the Ce-Zr-based complex oxide in the first catalyst layer 20 is the same as that described above.

From the viewpoint of improving the heat resistance and the OSC of the first catalyst layer 20 and thereby improving the exhaust gas purification performance of the first catalyst layer 20, a percentage of a mass of Zr in terms of ZrO₂ derived from the Ce-Zr-based complex oxide relative to the mass of Zr in terms of ZrO₂ in the first catalyst layer 20 is preferably 80% by mass or more, more preferably 85% by mass or more, and still more preferably 90% by mass or more. The upper limit is 100% by mass.

The first catalyst layer 20 may contain other components such as a binder, a stabilizer, and the like. Examples of the binder include metal oxide-based binders such as an alumina sol, a ceria sol, a zirconia sol, a titania sol, and a silica sol. Examples of the stabilizer include nitrates, carbonates, oxides, sulfates, and the like of alkaline earth metal elements (for example, Sr, Ba, and the like).

### <Second Catalyst Layer>

Hereinafter, the second catalyst layer 30 will be described.

As shown in FIGS. 3 and 4, the second catalyst layer 30 is provided on the first catalyst layer 20.

The expression "the second catalyst layer 30 is provided on the first catalyst layer 20" means that a part or the whole of the second catalyst layer 30 is present on, of two main surfaces of the first catalyst layer 20, the main surface opposite to the main surface on the partition wall 12 side. The expression "the main surface of the first catalyst layer 20" refers to an outer surface of the first catalyst layer 20, the outer surface extending in the exhaust gas flow direction X. **The** second catalyst layer 30 may be provided directly or via another layer on the main surface of the first catalyst layer 20, but is usually provided directly on the main surface of the first catalyst layer 20. **The** second catalyst layer 30 may be provided to cover a part or the whole of the main surface of the first catalyst layer 20. **The** expression "the second catalyst layer 30 provided on the first catalyst layer 20" encompasses both an embodiment wherein the second catalyst layer 30 is provided directly on the main surface of the first catalyst layer 20 and an embodiment wherein the second catalyst layer 30 is provided via another layer on the main surface of the first catalyst layer 20.

As shown in FIG. 4, the second catalyst layer 30 extends along the exhaust gas flow direction X from the end on the exhaust gas inflow side of the partition wall 12 to the end on the exhaust gas outflow side of the partition wall 12. The second catalyst layer 30 may extend along the exhaust gas flow direction X from the end on the exhaust gas inflow side of the partition wall 12 so as not to reach the end on the exhaust gas outflow side of the partition wall 12, or may extend along a direction opposite to the exhaust gas flow direction X from the end on the exhaust gas outflow side of the partition wall 12 so as not to reach the end on the exhaust gas inflow side of the partition wall 12.

From the viewpoint of achieving a good balance between the exhaust gas purification performance and the cost, and also improving the contact between exhaust gas and a catalytically active component contained in a portion below the second catalyst layer 30 (for example, Pd contained in the first catalyst layer 20), a mass of the second catalyst layer 30 per unit volume of a portion of the substrate 10 on which the second catalyst layer 30 is formed is preferably 30 g/L or more and 160 g/L or less, more preferably 40 g/L or more and 140 g/L or less, and still more preferably 50 g/L or more and 120 g/L or less. Each of the above lower limits may be combined with any of the above upper limits.

**The** mass of the second catalyst layer 30 per unit volume of the portion of the substrate 10 on which the second catalyst layer 30 is formed is calculated by the following formula: (the mass of the second catalyst layer 30) / ((the volume of the substrate 10) x (the average length L30 of the second catalyst layer 30 / the length L10 of the substrate 10)).

The above description regarding the method for measuring the average length L20 of the first catalyst layer 20 also applies to the second catalyst layer 30. In such a case, "the first catalyst layer 20" should be read as "the second catalyst layer 30", and "the average length L20" should be read as "the average length L30".

The second catalyst layer 30 contains Rh as a catalytically active component. Rh is contained in the second catalyst layer 30 in a form capable of functioning as a catalytically active component, for example, in a form of a catalytically active component containing Rh, such as metallic Rh, an alloy containing Rh, or a compound containing Rh (for example, an oxide of Rh). From the viewpoint of improving the exhaust gas purification performance, the catalytically active component containing Rh is preferably in particulate form.

From the viewpoint of achieving a good balance between the exhaust gas purification performance and the cost, the percentage of the mass of Rh in terms of metal in the second catalyst layer 30 relative to the mass of the second catalyst layer 30 (that is, "b") is preferably 0.01% by mass or more and 5% by mass or less, more preferably 0.02% by mass or more and 4% by mass or less, and still more preferably 0.03% by mass or more and 3% by mass or less. Each of the above lower limits may be combined with any of the above upper limits.

The second catalyst layer 30 may contain one or more noble metal elements other than Rh as catalytically active components. The noble metal element other than Rh can be selected, for example, from Pt, Pd, Ru, Os, Ir, Au, Ag, and the like. The noble metal element other than Rh is contained in the second catalyst layer 30 in a form capable of functioning as a catalytically active component, for example, in a form of a catalytically active component containing the noble metal element other than Rh, such as a metal, an alloy containing the noble metal element, or a compound containing the noble metal element (for example, an oxide of the noble metal element). From the viewpoint of improving the exhaust gas purification performance, the catalytically active component containing the noble metal element other than Rh is preferably in particulate form.

When the second catalyst layer 30 contains Rh and a noble metal element other than Rh, Rh and the noble metal element other than Rh may form an alloy, which may reduce active sites of Rh involved in exhaust gas purification performance. Therefore, it is preferable that a percentage of a mass of a noble metal element other than Rh in terms of metal in the second catalyst layer 30 relative to the mass of the second catalyst layer 30 (in the present specification, referred to as the "content of a noble metal element other than Rh in terms of metal in the second catalyst layer 30") is small. Specifically, the content of a noble metal element other than Rh in terms of metal in the second catalyst layer 30 is preferably 0.01% by mass or less, more preferably 0.005% by mass or less, and still more preferably 0.003% by mass or less. The lower limit is 0% by mass. The "content of a noble metal element other than Rh in terms of metal in the second catalyst layer 30" refers to, when the second catalyst layer 30 contains one noble metal element other than Rh, a content of the one noble metal element in terms of metal, and when the second catalyst layer 30 contains two or more noble metal elements other than Rh, a total content of the two or more noble metal elements in terms of metal.

A content of a predetermined noble metal element in terms of metal in the second catalyst layer 30 can be determined in the same manner as that of a predetermined noble metal element in terms of metal in the first catalyst layer 20.

It is preferable that the second catalyst layer 30 contains one or more carriers, and that at least a part of a catalytically active component is supported on the one or more carriers. The carrier can be selected, for example, from a metal oxide. The description regarding the metal oxide is the same as that described above.

From the viewpoint of improving the heat resistance and/or the OSC of the second catalyst layer 30 and thereby improving the exhaust gas purification performance of the second catalyst layer 30, the carrier is preferably selected from an Al-based oxide, a Ce-based oxide, and a Ce-Zr-based complex oxide, and more preferably selected from an Al-based oxide and a Ce-Zr-based complex oxide. In one embodiment, the second catalyst layer 30 contains an Al-based oxide and a Ce-Zr-based complex oxide as carriers.

The second catalyst layer 30 contains Ce. The percentage of the mass of Ce in terms of CeO₂ in the second catalyst layer 30 relative to the mass of the second catalyst layer 30 (in the present specification, referred to as the "content of Ce in terms of CeO₂ in the second catalyst layer 30") is 7% by mass or more. This makes it possible to improve the OSC of the second catalyst layer 30 and thereby improve the exhaust gas purification performance of the second catalyst layer 30.

From the viewpoint of improving the OSC of the second catalyst layer 30 and thereby improving the exhaust gas purification performance of the second catalyst layer 30, the content of Ce in terms of CeO₂ in the second catalyst layer 30 is preferably 8% by mass or more, more preferably 10% by mass or more, and still more preferably 11% by mass or more. The upper limit can be appropriately adjusted in consideration of a balance with cost, contents of other components, and the like. The upper limit is preferably 30% by mass or less, more preferably 25% by mass or less, and still more preferably 20% by mass or less. Each of the above lower limits may be combined with any of the above upper limits.

The second catalyst layer 30 contains one or more Ce sources. The description regarding the Ce source is the same as that described above.

From the viewpoint of improving the OSC of the second catalyst layer 30 and thereby improving the exhaust gas purification performance of the second catalyst layer 30, the second catalyst layer 30 preferably contains a Ce-Zr-based complex oxide as a Ce source. The second catalyst layer 30 may contain, in addition to the Ce-Zr-based complex oxide, one or more other Ce sources.

From the viewpoint of improving the heat resistance and the OSC of the second catalyst layer 30 and thereby improving the exhaust gas purification performance of the second catalyst layer 30, a percentage of a mass of the Ce-Zr-based complex oxide in the second catalyst layer 30 relative to the mass of the second catalyst layer 30 (in the present specification, referred to as the "content of the Ce-Zr-based complex oxide in the second catalyst layer 30") is preferably 20% by mass or more, more preferably 25% by mass or more, and still more preferably 30% by mass or more. The upper limit can be appropriately adjusted in consideration of a balance with cost, contents of other components, and the like. The upper limit is preferably 80% by mass or less, more preferably 75% by mass or less, and still more preferably 70% by mass or less. Each of the above lower limits may be combined with any of the above upper limits.

The content of the Ce-Zr-based complex oxide in the second catalyst layer 30 can be determined in the same manner as that of the Ce-Zr-based complex oxide in the first catalyst layer 20.

From the viewpoint of improving the heat resistance and the OSC of the second catalyst layer 30 and thereby improving the exhaust gas purification performance of the second catalyst layer 30, a percentage of a mass of Ce in terms of CeO₂ derived from the Ce-Zr-based complex oxide relative to the mass of Ce in terms of CeO₂ in the second catalyst layer 30 is preferably 80% by mass or more, more preferably 85% by mass or more, and still more preferably 90% by mass or more. The upper limit is 100% by mass.

When the second catalyst layer 30 contains a Ce-Zr-based complex oxide, the average particle diameter of the Ce-Zr-based complex oxide contained in the second catalyst layer 30 is preferably 2 µm or more and 20 µm or less, and more preferably 5 µm or more and 15 µm or less. Each of the above lower limits may be combined with any of the above upper limits.

From the viewpoint of improving the heat resistance of the second catalyst layer 30 and thereby improving the exhaust gas purification performance of the second catalyst layer 30, the second catalyst layer 30 preferably contains Al and/or Zr.

From the viewpoint of improving the heat resistance of the second catalyst layer 30 and thereby improving the exhaust gas purification performance of the second catalyst layer 30, a percentage of a total of a mass of Al in terms of Al₂O₃ in the second catalyst layer 30 and a mass of Zr in terms of ZrO₂ in the second catalyst layer 30 relative to the mass of the second catalyst layer 30 is preferably 50% by mass or more, more preferably 55% by mass or more, and still more preferably 65% by mass or more. The upper limit can be appropriately adjusted in consideration of a balance with cost and contents of other components. The upper limit is preferably 96% by mass or less, more preferably 93% by mass or less, and still more preferably 90% by mass or less. Each of the above lower limits may be combined with any of the above upper limits.

From the viewpoint of improving the heat resistance of the second catalyst layer 30 and thereby improving the exhaust gas purification performance of the second catalyst layer 30, a percentage of the mass of Al in terms of Al₂O₃ in the second catalyst layer 30 relative to the mass of the second catalyst layer 30 (in the present specification, referred to as the "content of Al in terms of Al₂O₃ in the second catalyst layer 30") is preferably 15% by mass or more, more preferably 20% by mass or more, and still more preferably 25% by mass or more. The upper limit can be appropriately adjusted in consideration of a balance with cost, contents of other components, and the like. The upper limit is preferably 55% by mass or less, more preferably 50% by mass or less, and still more preferably 45% by mass or less. Each of the above lower limits may be combined with any of the above upper limits.

When the second catalyst layer 30 contains Al, the second catalyst layer 30 contains one or more Al sources. The description regarding the Al source is the same as that described above.

From the viewpoint of improving the heat resistance of the second catalyst layer 30 and thereby improving the exhaust gas purification performance of the second catalyst layer 30, the second catalyst layer 30 preferably contains an Al-based oxide as an Al source. The second catalyst layer 30 may contain, in addition to the Al-based oxide, one or more other Al sources.

From the viewpoint of improving the heat resistance of the second catalyst layer 30 and thereby improving the exhaust gas purification performance of the second catalyst layer 30, a percentage of a mass of the Al-based oxide in the second catalyst layer 30 relative to the mass of the second catalyst layer 30 (in the present specification, referred to as the "content of the Al-based oxide in the second catalyst layer 30") is preferably 10% by mass or more, more preferably 15% by mass or more, and still more preferably 20% by mass or more. The upper limit can be appropriately adjusted in consideration of a balance with cost, contents of other components, and the like. The upper limit is preferably 45% by mass or less, more preferably 40% by mass or less, and still more preferably 35% by mass or less. Each of the above lower limits may be combined with any of the above upper limits.

The content of the Al-based oxide in the second catalyst layer 30 can be determined in the same manner as the content of the Ce-Zr-based complex oxide in the first catalyst layer 20.

From the viewpoint of improving the heat resistance of the second catalyst layer 30 and thereby improving the exhaust gas purification performance of the second catalyst layer 30, a percentage of a mass of Al in terms of Al₂O₃ derived from the Al-based oxide relative to the mass of Al in terms of Al₂O₃ in the second catalyst layer 30 is preferably 80% by mass or more, more preferably 85% by mass or more, and still more preferably 90% by mass or more. The upper limit is 100% by mass.

When the second catalyst layer 30 contains an Al-based oxide, the average particle diameter of the Al-based oxide contained in the second catalyst layer 30 is preferably 3 µm or more and 20 µm or less, and more preferably 5 µm or more and 15 µm or less. Each of the above lower limits may be combined with any of the above upper limits.

From the viewpoint of improving the heat resistance of the second catalyst layer 30 and thereby improving the exhaust gas purification performance of the second catalyst layer 30, a percentage of the mass of Zr in terms of ZrO₂ in the second catalyst layer 30 relative to the mass of the second catalyst layer 30 (in the present specification, referred to as the "content of Zr in terms of ZrO₂ in the second catalyst layer 30") is preferably 15% by mass or more, more preferably 20% by mass or more, and still more preferably 25% by mass or more. The upper limit can be appropriately adjusted in consideration of a balance with cost, contents of other components, and the like. The upper limit is preferably 65% by mass or less, more preferably 60% by mass or less, and still more preferably 55% by mass or less. Each of the above lower limits may be combined with any of the above upper limits.

When the second catalyst layer 30 contains Zr, the second catalyst layer 30 contains one or more Zr sources. The description regarding the Zr source is the same as that described above.

From the viewpoint of improving the heat resistance and the OSC of the second catalyst layer 30 and thereby improving the exhaust gas purification performance of the second catalyst layer 30, the second catalyst layer 30 preferably contains a Ce-Zr-based complex oxide as a Zr source. The second catalyst layer 30 may contain, in addition to the Ce-Zr-based complex oxide, one or more other Zr sources.

The description regarding the content of the Ce-Zr-based complex oxide in the second catalyst layer 30 is the same as that described above.

From the viewpoint of improving the heat resistance and the OSC of the second catalyst layer 30 and thereby improving the exhaust gas purification performance of the second catalyst layer 30, a percentage of a mass of Zr in terms of ZrO₂ derived from the Ce-Zr-based complex oxide relative to the mass of Zr in terms of ZrO₂ in the second catalyst layer 30 is preferably 80% by mass or more, more preferably 85% by mass or more, and still more preferably 90% by mass or more. The upper limit is 100% by mass.

The second catalyst layer 30 may contain other components such as a binder, a stabilizer, and the like. The description regarding the binder and the stabilizer is the same as that described above.

From the viewpoint of improving the contact between exhaust gas and a catalytically active component contained in a portion below the second catalyst layer 30 (for example, Pd contained in the first catalyst layer 20), thereby improving the exhaust gas purification performance of the first catalyst layer 20, an average thickness of the second catalyst layer 30 is preferably 100 µm or less, more preferably 80 µm or less, and still more preferably 60 µm or less. The lower limit can be appropriately adjusted in consideration of OSC required for the second catalyst layer 30, and the like. The lower limit is preferably 20 µm or more, more preferably 25 µm or more, and still more preferably 30 µm or more. Each of the above lower limits may be combined with any of the above upper limits.

The calculation method of the average thickness of the second catalyst layer 30 will be described later.

### <Third Catalyst Layer>

Hereinafter, the third catalyst layer 40 will be described.

As shown in FIGS. 3 and 4, the third catalyst layer 40 is provided on the second catalyst layer 30.

The expression "the third catalyst layer 40 is provided on the second catalyst layer 30" means that a part or the whole of the third catalyst layer 40 is present on, of two main surfaces of the second catalyst layer 30, the main surface opposite to the main surface on the first catalyst layer 20 side. The expression "the main surface of the second catalyst layer 30" refers to an outer surface of the second catalyst layer 30, the outer surface extending in the exhaust gas flow direction X. The third catalyst layer 40 may be provided directly or via another layer on the main surface of the second catalyst layer 30, but is usually provided directly on the main surface of the second catalyst layer 30. The third catalyst layer 40 may be provided to cover a part or the whole of the main surface of the second catalyst layer 30. The expression "the third catalyst layer 40 provided on the second catalyst layer 30" encompasses both an embodiment wherein the third catalyst layer 40 is provided directly on the main surface of the second catalyst layer 30 and an embodiment wherein the third catalyst layer 40 is provided via another layer on the main surface of the second catalyst layer 30.

Another catalyst layer may be provided on the third catalyst layer 40; however, from the viewpoint of more effectively improving the contact between exhaust gas and Rh contained in the third catalyst layer 40, it is preferable that no other catalyst layer is provided on the third catalyst layer 40.

As shown in FIG. 4, the third catalyst layer 40 extends along the exhaust gas flow direction X from the end on the exhaust gas inflow side of the partition wall 12 to the end on the exhaust gas outflow side of the partition wall 12. The third catalyst layer 40 may extend along the exhaust gas flow direction X from the end on the exhaust gas inflow side of the partition wall 12 so as not to reach the end on the exhaust gas outflow side of the partition wall 12, or may extend along a direction opposite to the exhaust gas flow direction X from the end on the exhaust gas outflow side of the partition wall 12 so as not to reach the end on the exhaust gas inflow side of the partition wall 12.

From the viewpoint of achieving a good balance between the exhaust gas purification performance and the cost, and also improving the contact between exhaust gas and a catalytically active component contained in a portion below the third catalyst layer 40 (for example, Pd contained in the first catalyst layer 20 and Rh contained in the second catalyst layer 30), a mass of the third catalyst layer 40 per unit volume of a portion of the substrate 10 on which the third catalyst layer 40 is formed is preferably 10 g/L or more and 70 g/L or less, more preferably 12 g/L or more and 60 g/L or less, and still more preferably 15 g/L or more and 50 g/L or less. Each of the above lower limits may be combined with any of the above upper limits.

The mass of the third catalyst layer 40 per unit volume of the portion of the substrate 10 on which the third catalyst layer 40 is formed is calculated by the following formula: (the mass of the third catalyst layer 40) / ((the volume of the substrate 10) x (the average length L40 of the third catalyst layer 40 / the length L10 of the substrate 10)).

The above description regarding the method for measuring the average length L20 of the first catalyst layer 20 also applies to the third catalyst layer 40. In such a case, "the first catalyst layer 20" should be read as "the third catalyst layer 40", and "the average length L20" should be read as "the average length L40".

The third catalyst layer 40 contains Rh as a catalytically active component. Rh is contained in the third catalyst layer 40 in a form capable of functioning as a catalytically active component, for example, in a form of a catalytically active component containing Rh, such as metallic Rh, an alloy containing Rh, or a compound containing Rh (for example, an oxide of Rh). From the viewpoint of improving the exhaust gas purification performance, the catalytically active component containing Rh is preferably in particulate form.

From the viewpoint of achieving a good balance between the exhaust gas purification performance and the cost, the percentage of the mass of Rh in terms of metal in the third catalyst layer 40 relative to the mass of the third catalyst layer 40 (that is, "a") is preferably 0.02% by mass or more and 10% by mass or less, more preferably 0.05% by mass or more and 8% by mass or less, and still more preferably 0.1% by mass or more and 6% by mass or less. Each of the above lower limits may be combined with any of the above upper limits.

The third catalyst layer 40 may contain one or more noble metal elements other than Rh as catalytically active components. The noble metal element other than Rh can be selected, for example, from Pt, Pd, Ru, Os, Ir, Au, Ag, and the like. The noble metal element other than Rh is contained in the third catalyst layer 40 in a form capable of functioning as a catalytically active component, for example, in a form of a catalytically active component containing the noble metal element other than Rh, such as a metal, an alloy containing the noble metal element, or a compound containing the noble metal element (for example, an oxide of the noble metal element). From the viewpoint of improving the exhaust gas purification performance, the catalytically active component containing the noble metal element other than Rh is preferably in particulate form.

When the third catalyst layer 40 contains Rh and a noble metal element other than Rh, Rh and the noble metal element other than Rh may form an alloy, which may reduce active sites of Rh involved in exhaust gas purification performance. Therefore, it is preferable that a percentage of a mass of a noble metal element other than Rh in terms of metal in the third catalyst layer 40 relative to the mass of the third catalyst layer 40 (in the present specification, referred to as the "content of a noble metal element other than Rh in terms of metal in the third catalyst layer 40") is small. Specifically, the content of a noble metal element other than Rh in terms of metal in the third catalyst layer 40 is preferably 0.01% by mass or less, more preferably 0.005% by mass or less, and still more preferably 0.003% by mass or less. The lower limit is 0% by mass. The "content of a noble metal element other than Rh in terms of metal in the third catalyst layer 40" refers to, when the third catalyst layer 40 contains one noble metal element other than Rh, a content of the one noble metal element in terms of metal, and when the third catalyst layer 40 contains two or more noble metal elements other than Rh, a total content of the two or more noble metal elements in terms of metal.

It is preferable that the third catalyst layer 40 contains one or more carriers, and that at least a part of a catalytically active component is supported on the one or more carriers. The carrier can be selected, for example, from a metal oxide. The description regarding the metal oxide is the same as that described above.

From the viewpoint of improving the heat resistance and/or the OSC of the second catalyst layer 30 and thereby improving the exhaust gas purification performance of the third catalyst layer 40, the carrier is preferably selected from an Al-based oxide, a Ce-based oxide, and a Ce-Zr-based complex oxide, and more preferably selected from an Al-based oxide and a Ce-Zr-based complex oxide. In one embodiment, the third catalyst layer 40 contains an Al-based oxide and a Ce-Zr-based complex oxide as carriers.

The third catalyst layer 40 contains Al and/or Zr. This makes it possible to improve the heat resistance of the third catalyst layer 40 and thereby improve the exhaust gas purification performance of the third catalyst layer 40.

From the viewpoint of improving the heat resistance of the third catalyst layer 40 and thereby the improving exhaust gas purification performance of the third catalyst layer 40, a percentage of a total of a mass of Al in terms of Al₂O₃ in the third catalyst layer 40 and a mass of Zr in terms of ZrO₂ in the third catalyst layer 40 relative to the mass of the third catalyst layer 40 is preferably 80% by mass or more, more preferably 85% by mass or more, and still more preferably 90% by mass or more. The upper limit can be appropriately adjusted in consideration of a balance with cost and contents of other components. The upper limit is preferably 99% by mass or less, more preferably 97% by mass or less, and still more preferably 95% by mass or less. Each of the above lower limits may be combined with any of the above upper limits.

From the viewpoint of improving the heat resistance of the third catalyst layer 40 and thereby improving the exhaust gas purification performance of the third catalyst layer 40, a percentage of the mass of Al in terms of Al₂O₃ in the third catalyst layer 40 relative to the mass of the third catalyst layer 40 (in the present specification, referred to as the "content of Al in terms of Al₂O₃ in the third catalyst layer 40") is preferably 60% by mass or more, more preferably 65% by mass or more, and still more preferably 70% by mass or more. The upper limit can be appropriately adjusted in consideration of a balance with cost, contents of other components, and the like. The upper limit is preferably 95% by mass or less, more preferably 90% by mass or less, and still more preferably 85% by mass or less. Each of the above lower limits may be combined with any of the above upper limits.

When the third catalyst layer 40 contains Al, the third catalyst layer 40 contains one or more Al sources. The description regarding the Al source is the same as that described above.

From the viewpoint of improving the heat resistance of the third catalyst layer 40 and thereby improving the exhaust gas purification performance of the third catalyst layer 40, the third catalyst layer 40 preferably contains an Al-based oxide as an Al source. The third catalyst layer 40 may contain, in addition to the Al-based oxide, one or more other Al sources.

From the viewpoint of improving the heat resistance of the third catalyst layer 40 and thereby improving the exhaust gas purification performance of the third catalyst layer 40, a percentage of a mass of the Al-based oxide in the third catalyst layer 40 relative to the mass of the third catalyst layer 40 (in the present specification, referred to as the "content of the Al-based oxide in the third catalyst layer 40") is preferably 65% by mass or more, more preferably 70% by mass or more, and still more preferably 75% by mass or more. The upper limit can be appropriately adjusted in consideration of a balance with cost, contents of other components, and the like. The upper limit is preferably 99% by mass or less, more preferably 95% by mass or less, and still more preferably 93% by mass or less. Each of the above lower limits may be combined with any of the above upper limits.

The content of the Al-based oxide in the third catalyst layer 40 can be determined in the same manner as the content of the Ce-Zr-based complex oxide in the first catalyst layer 20.

From the viewpoint of improving the heat resistance of the third catalyst layer 40 and thereby improving the exhaust gas purification performance of the third catalyst layer 40, a percentage of a mass of Al in terms of Al₂O₃ derived from the Al-based oxide relative to the mass of Al in terms of Al₂O₃ in the third catalyst layer 40 is preferably 80% by mass or more, more preferably 85% by mass or more, and still more preferably 90% by mass or more. The upper limit is 100% by mass.

When the third catalyst layer 40 contains an Al-based oxide, the average particle diameter of the Al-based oxide contained in the third catalyst layer 40 is preferably 0.1 µm or more and 9 µm or less, and more preferably 0.1 µm or more and 7 µm or less. Each of the above lower limits may be combined with any of the above upper limits.

From the viewpoint of improving the heat resistance of the third catalyst layer 40 and thereby improving the exhaust gas purification performance of the third catalyst layer 40, a percentage of the mass of Zr in terms of ZrO₂ in the third catalyst layer 40 relative to the mass of the third catalyst layer 40 (in the present specification, referred to as the "content of Zr in terms of ZrO₂ in the third catalyst layer 40") is preferably 10% by mass or more, more preferably 11% by mass or more, and still more preferably 15% by mass or more. The upper limit can be appropriately adjusted in consideration of a balance with cost, contents of other components, and the like. The upper limit is preferably 30% by mass or less, more preferably 27% by mass or less, and still more preferably 25% by mass or less. Each of the above lower limits may be combined with any of the above upper limits.

When the third catalyst layer 40 contains Zr, the third catalyst layer 40 contains one or more Zr sources. The description regarding the Zr source is the same as that described above. In one embodiment, the third catalyst layer 40 contains a Ce-Zr-based complex oxide as a Zr source.

The percentage of the mass of Ce in terms of CeO₂ in the third catalyst layer 40 relative to the mass of the third catalyst layer 40 (in the present specification, referred to as the "content of Ce in terms of CeO₂ in the third catalyst layer 40") is less than 7% by mass. This makes it possible to improve the heat resistance of the third catalyst layer 40 and thereby improve the exhaust gas purification performance of the third catalyst layer 40.

From the viewpoint of improving the heat resistance of the third catalyst layer 40 and thereby improving the exhaust gas purification performance of the third catalyst layer 40, the content of Ce in terms of CeO₂ in the third catalyst layer 40 is preferably 6% by mass or less, more preferably 5% by mass or less, and still more preferably 4% by mass or less. The lower limit is 0% by mass.

The third catalyst layer 40 may contain Ce. When the third catalyst layer 40 contains Ce, the content of Ce in terms of CeO₂ in the third catalyst layer 40 may be, for example, 0.5% by mass or more, 1% by mass or more, or 1.5% by mass or more. Each of the above lower limits may be combined with any of the above upper limits.

When the third catalyst layer 40 contains Ce, the third catalyst layer 40 contains one or more Ce sources. The description regarding the Ce source is the same as that described above.

When the third catalyst layer 40 contains Ce, the third catalyst layer 40 preferably contains a Ce-Zr-based complex oxide as a Ce source. The third catalyst layer 40 may contain, in addition to the Ce-Zr-based complex oxide, one or more other Ce sources.

When the third catalyst layer 40 contains Ce, a percentage of a mass of the Ce-Zr-based complex oxide in the third catalyst layer 40 relative to the mass of third catalyst layer 40 (in the present specification, referred to as the "content of the Ce-Zr-based complex oxide in the third catalyst layer 40") is preferably 5% by mass or more, more preferably 10% by mass or more, and still more preferably 15% by mass or more. The upper limit can be appropriately adjusted in consideration of a balance with cost, contents of other components, and the like. The upper limit is preferably 40% by mass or less, more preferably 37% by mass or less, and still more preferably 35% by mass or less. Each of the above lower limits may be combined with any of the above upper limits.

The content of the Ce-Zr-based complex oxide in the third catalyst layer 40 can be determined in the same manner as that of the Ce-Zr-based complex oxide in the first catalyst layer 20.

When the third catalyst layer 40 contains Ce, a percentage of a mass of Ce in terms of CeO₂ derived from the Ce-Zr-based complex oxide relative to the mass of Ce in terms of CeO₂ in the third catalyst layer 40 is preferably 80% by mass or more, more preferably 85% by mass or more, and still more preferably 90% by mass or more. The upper limit is 100% by mass.

When the third catalyst layer 40 contains a Ce-Zr-based complex oxide, the average particle diameter of the Ce-Zr-based complex oxide contained in the third catalyst layer 40 is preferably 0.1 µm or more and 9 µm or less, and more preferably 0.1 µm or more and 7 µm or less. Each of the above lower limits may be combined with any of the above upper limits.

The third catalyst layer 40 may contain other components such as a binder, a stabilizer, and the like. The description regarding the binder and the stabilizer is the same as that described above.

The average thickness of the third catalyst layer 40 is 10 µm or less. This makes it possible to improve the contact between exhaust gas and a catalytically active component contained in a portion below the third catalyst layer 40 (for example, Pd contained in the first catalyst layer 20 and Rh contained in the second catalyst layer 30), thereby improving the exhaust gas purification performance of the portion below the third catalyst layer 40 (for example, the first catalyst layer 20 and the second catalyst layer 30).

From the viewpoint of improving the contact between exhaust gas and a catalytically active component contained in the portion below the third catalyst layer 40, the average thickness of the third catalyst layer 40 is preferably 7 µm or less, more preferably 5 µm or less, and still more preferably 4 µm or less. The lower limit can be appropriately adjusted in consideration of heat resistance required for the third catalyst layer 40, and the like. The lower limit is preferably 0.5 µm or more, more preferably 1 µm or more, and still more preferably 1.5 µm or more. Each of the above lower limits may be combined with any of the above upper limits.

An example of the method of calculating the average thickness of the second catalyst layer 30 and the average thickness of the third catalyst layer 40 is as follows.

The catalyst 1 is cut along a plane perpendicular to the axial direction of the substrate 10 (when the first catalyst layer 20 extends along the exhaust gas flow direction X from the end on the exhaust gas inflow side of the partition wall 12 to the end on the exhaust gas outflow side of the partition wall 12, for example, at a position 30 mm away from the end on the exhaust gas inflow side of the partition wall 12 in the exhaust gas flow direction X; when the first catalyst layer 20 extends along the exhaust gas flow direction X from the end on the exhaust gas inflow side of the partition wall 12 so as not to reach the end on the exhaust gas outflow side of the partition wall 12, for example, at a position 10 mm away from the end on the exhaust gas inflow side of the partition wall 12 in the exhaust gas flow direction X; and when the first catalyst layer 20 extends along a direction opposite to the exhaust gas flow direction X from the end on the exhaust gas outflow side of the partition wall 12 so as not to reach the end on the exhaust gas inflow side of the partition wall 12, for example, at a position 10 mm away from the end on the exhaust gas outflow side of the partition wall 12 in the direction opposite to the exhaust gas flow direction X). The first catalyst layer 20, the second catalyst layer 30, and the third catalyst layer 40 present in one cell 13 arbitrarily selected from the resulting cross section are observed using SEM or a backscattered electron detector (BED) in EPMA, to identify the region in which the first catalyst layer 20 is present, the region in which the second catalyst layer 30 is present, and the region in which the third catalyst layer 40 is present. In the observation of the cross section by SEM or BED, the field magnification is, for example, 500 times, and the field width (length) is, for example, from 100 to 200 µm. The region to be observed by SEM or BED is selected so as not to include any of the corners of the cell 13. This is because the corners of the cell 13 are easily affected by the cell shape. The region in which the first catalyst layer 20 is present, the region in which the second catalyst layer 30 is present, and the region in which the third catalyst layer 40 is present can be identified based on differences in morphology, composition, and the like among the first catalyst layer 20, the second catalyst layer 30, and the third catalyst layer 40. At this time, element mapping of the cross section may be performed. The element mapping can be performed, for example, by combining the observation of the cross section by SEM or BED with compositional analysis of the cross section. The element mapping can be performed, for example, using SEM-EDX or EPMA. By performing the element mapping of the cross section, the region in which the first catalyst layer 20 is present, the region in which the second catalyst layer 30 is present, and the region in which the third catalyst layer 40 is present can be identified based on differences in morphology and composition among the first catalyst layer 20, the second catalyst layer 30, and the third catalyst layer 40.

In the SEM or BED observation image, the first to N-th grid lines parallel to the thickness direction of the partition wall 12 of the substrate 10 are drawn at 15 µm intervals sequentially from the left end side or the right end side, and the intersections of the outline of the region in which the first catalyst layer 20 is present and the respective grid lines are connected with straight lines to identify the position of the surface of the first catalyst layer 20. N is, for example, an integer from 5 to 10. Similarly, the intersections of the outline of the region in which the second catalyst layer 30 is present and the respective grid lines are connected with straight lines to identify the position of the surface of the second catalyst layer 30. Similarly, the intersections of the outline of the region in which the third catalyst layer 40 is present and the respective grid lines are connected with straight lines to identify the position of the surface of the third catalyst layer 40. When the amount of change in the thickness direction from an intersection P1 to an intersection P2 adjacent to the intersection P1 exceeds the interval between grid lines (15 µm), it is preferred not to use the intersection P2 in identifying the surface position (namely, to exclude the intersection P2 from the intersections to be connected with straight lines). The "amount of change in the thickness direction from an intersection P1 to an intersection P2 adjacent to the intersection P1" refers to the distance between the straight line passing through the intersection P1 and perpendicular to the thickness direction of the partition wall 12 of the substrate 10 and the straight line passing through the intersection P2 and perpendicular to the thickness direction of the partition wall 12. When the amount of change in the thickness direction from the intersection P1 to the intersection P2 adjacent to the intersection P1 exceeds the interval between grid lines (15 µm) and the amount of change in the thickness direction from the intersection P1 to an intersection P3 adjacent to the intersection P2 also exceeds the interval between grid lines (15 µm), it is preferred not to use the intersection P3 in addition to the intersection P2 in identifying the surface position (namely, to exclude the intersection P2 and the intersection P3 from the intersections to be connected with straight lines). When five successive intersections are excluded in this manner, it is preferred not to perform thickness measurement for the SEM or BED image.

After identifying the position of the surface of the first catalyst layer 20, the position of the surface of the second catalyst layer 30, and the position of the surface of the third catalyst layer 40, the area of a first region surrounded by the second grid line, the (N-1)-th grid line, the surface of the first catalyst layer 20, and the surface of the second catalyst layer 30 is determined using image analysis software. Similarly, the area of a second region surrounded by the second grid line, the (N-1)-th grid line, the surface of the second catalyst layer 30, and the surface of the third catalyst layer 40 is determined. As the image analysis software, for example, AreaQ (manufactured by S-Tech Corporation), ImageJ (public domain), Photoshop (manufactured by Adobe Systems Inc.), or the like can be used. The first grid line and the N-th grid line are not used, since both ends of the image tend to be unclear, making it difficult to identify the position of the surface of the first catalyst layer 20, the position of the surface of the second catalyst layer 30, and the position of the surface of the third catalyst layer 40.

After determining the areas of the first region and the second region, the thickness of each region is calculated based on the following formula: 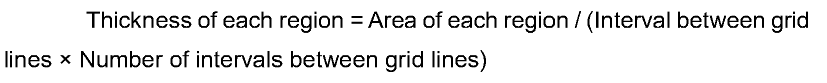 Thickness of each region = Area of each region / (Interval between grid lines × Number of intervals between grid lines)

The interval between grid lines is 15 µm, and the number of intervals is (N-3).

The thickness of the first region is calculated for 20 cells 13 arbitrarily selected from the cross section, and the average value thereof is defined as the average thickness of the second catalyst layer 30. The thickness of the second region is calculated for 20 cells 13 arbitrarily selected from the cross section, and the average value thereof is defined as the average thickness of the third catalyst layer 40.

### <Production of Catalyst>

The catalyst 1 can be produced by forming a first catalyst layer 20 on a substrate 10, subsequently forming a second catalyst layer 30 on the first catalyst layer 20, and subsequently forming a third catalyst layer 40 on the second catalyst layer 30.

The first catalyst layer 20 can be formed by preparing a first slurry by mixing a Pd source (e.g., a Pd salt) and, optionally, other components (e.g., a metal oxide, a binder, a stabilizer, a solvent, etc.), applying the first slurry onto the substrate 10, and drying and calcining the applied slurry.

The second catalyst layer 30 can be formed by preparing a second slurry by mixing an Rh source (e.g., an Rh salt), a Ce source (e.g., a Ce-Zr-based complex oxide), and, optionally, other components (e.g., a metal oxide other than the Ce source, a binder, a stabilizer, a solvent, etc.), applying the second slurry onto the first catalyst layer 20, and drying and calcining the applied slurry.

The third catalyst layer 40 can be formed by preparing a third slurry by mixing an Rh source (e.g., an Rh salt), an Al source (e.g., an Al-based oxide) and/or a Zr source (e.g., a Ce-Zr-based complex oxide), and, optionally, other components (e.g., a metal oxide other than the Al source and the Zr source, a binder, a stabilizer, a solvent, etc.), applying the third slurry onto the second catalyst layer 30, and drying and calcining the applied slurry.

Examples of the Pd salt and the Rh salt include nitrates, ammine complex salts, acetates, chlorides, and the like. Examples of the binder include alumina sol, zirconia sol, titania sol, silica sol, ceria sol, and the like. Examples of the solvent include water, organic solvents, and the like.

The drying temperature is, for example, 60°C or higher and 150°C or lower, and the drying time is, for example, 0.1 hours or longer and 1 hour or shorter. The calcination temperature is, for example, 300°C or higher and 700°C or lower, and the calcination time is, for example, 1 hour or longer and 10 hours or shorter. The calcination can be performed, for example, in an air atmosphere.

### EXAMPLES

### <Example 1>

### (1) Preparation of Slurry for Forming Lower Layer

An aqueous palladium nitrate solution, a Ce-Zr-based complex oxide (Content of Ce in terms of CeO₂: 13 to 50% by mass; Content of Zr in terms of ZrO₂: 35 to 70% by mass; Content of one or more rare-earth elements other than Ce in terms of oxides: 9 to 20% by mass), an Al-based oxide (Content of Al in terms of Al₂O₃: 95% by mass or more), an alumina binder, a zirconia binder, and water were added to a mixing vessel. These components were mixed and stirred to prepare a slurry for forming a lower layer. The contents of components in the slurry for forming a lower layer were adjusted such that, based on the mass of a lower layer after calcination (100% by mass), the content of Pd in terms of metal was 2.0% by mass, the content of Ce in terms of CeO₂ was 18.0% by mass, the content of Zr in terms of ZrO₂ was 18.0% by mass, the content of Al in terms of Al₂O₃ was 57.5% by mass, and the content of rare-earth elements other than Ce in terms of oxides was 4.5% by mass.

### (2) Formation of Lower Layer

A flow-through substrate was prepared, having cells extending in the axial direction and partitioned by a partition wall with a thickness of 50 to 70 µm, with a cell density of 600 cells per square inch in a plane perpendicular to the axial direction, and having a volume of 1.0 L.

The flow-through substrate was immersed in the slurry for forming a lower layer, and the slurry-coated substrate was dried at 150°C for 0.5 hours and then calcined at 500°C for 1 hour to form a lower layer on the flow-through substrate. The mass of the lower layer per unit volume of the portion of the flow-through substrate on which the lower layer was formed was 100 g/L.

### (3) Preparation of Slurry for Forming Middle Layer

An aqueous rhodium nitrate solution, a Ce-Zr-based complex oxide (Contento of Ce in terms of CeO₂: 13 to 50% by mass; Content of Zr content in terms of ZrO₂: 35 to 70% by mass; Content of one or more rare-earth elements other than Ce in terms of oxides: 9 to 20% by mass), an Al-based oxide (Content of Al in terms of Al₂O₃: 95% by mass or more), an alumina binder, a zirconia binder, and water were added to a mixing vessel. These components were mixed and stirred to prepare a slurry for forming a middle layer. The contents of components in the slurry for forming a middle layer were adjusted such that, based on the mass of a middle layer after calcination (100% by mass), the content of Rh in terms of metal was 0.1% by mass, the content of Ce in terms of CeO₂ was 12.0% by mass, the content of Zr in terms of ZrO₂ was 42.0% by mass, the content of Al in terms of Al₂O₃ was 39.6% by mass, and the content of rare-earth elements other than Ce in terms of oxides was 6.3% by mass.

### (4) Formation of Middle Layer

The flow-through substrate having the lower layer formed thereon was immersed in the slurry for forming a middle layer, and the slurry-coated substrate was dried at 150°C for 0.5 hours and then calcined at 500°C for 1 hour to form a middle layer on the lower layer. The mass of the middle layer per unit volume of the portion of the flow-through substrate on which the middle layer was formed was 100 g/L.

### (5) Preparation of Slurry for Forming Upper Layer

An aqueous rhodium nitrate solution, a Ce-Zr-based complex oxide (Content of Ce in terms of CeO₂: 13 to 50% by mass; Content of Zr content in terms of ZrO₂: 35 to 70% by mass; Content of one or more rare-earth elements other than Ce in terms of oxides: 9 to 20% by mass), an Al-based oxide (Content of Al in terms of Al₂O₃: 95% by mass or more), an alumina binder, and water were added to a mixing vessel. These components were mixed and stirred to prepare a slurry for forming an upper layer. The contents of components in the slurry for forming an upper layer were adjusted such that, based on the mass of an upper layer after calcination (100% by mass), the content of Rh in terms of metal was 0.7% by mass, the content of Ce in terms of CeO₂ was 6.7% by mass, the content of Zr in terms of ZrO₂ was 23.3% by mass, the content of Al in terms of Al₂O₃ was 66.0% by mass, and the content of rare-earth elements other than Ce in terms of oxides was 3.3% by mass.

### (6) Formation of Upper Layer

The flow-through substrate having the middle layer formed thereon was immersed in the slurry for forming an upper layer, and the slurry-coated substrate was dried at 150°C for 0.5 hours and then calcined at 500°C for 1 hour to form an upper layer on the middle layer. The mass of the upper layer per unit volume of the portion of the flow-through substrate on which the upper layer was formed was 15 g/L.

In this manner, an exhaust gas purification catalyst of Example 1 was produced, including the lower layer formed on the flow-through substrate, the middle layer formed on the lower layer, and the upper layer formed on the middle layer. In the exhaust gas purification catalyst of Example 1, the lower layer, the middle layer, and the upper layer correspond to a first catalyst layer, a second catalyst layer, and a third catalyst layer, respectively.

The average thickness of the second catalyst layer and the average thickness of the third catalyst layer in the exhaust gas purification catalyst of Example 1 were calculated by the method described above. The details are as follows.

The exhaust gas purification catalyst of Example 1 (at a position 30 mm away from the end on the exhaust gas inflow side of the substrate in the axial direction of the substrate) was cut along a plane perpendicular to the axial direction of the substrate. Using a backscattered electron detector (BED) in EPMA, the first catalyst layer, the second catalyst layer, and the third catalyst layer present in one cell arbitrarily selected from the resulting cross section were observed, and the region in which the first catalyst layer was present, the region in which the second catalyst layer was present, and the region in which the third catalyst layer was present were identified. In the BED observation of the cross section, the field magnification was set to 500 times, and the field width was set to 100 to 200 µm. The region to be observed by BED was selected so as not to include any corner of the cell. The region in which the first catalyst layer was present, the region in which the second catalyst layer was present, and the region in which the third catalyst layer was present were identified by element mapping of the cross section using EPMA.

In the BED observation image, nine grid lines parallel to the thickness direction of the partition wall of the substrate were drawn at intervals of 15 µm sequentially from the left end side. The intersections of the outline of the region in which the first catalyst layer was present and the respective grid lines were connected with straight lines to identify the position of the surface of the first catalyst layer. Similarly, the intersections of the outline of the region in which the second catalyst layer was present and the respective grid lines were connected with straight lines to identify the position of the surface of the second catalyst layer. Similarly, the intersections of the outline of the region in which the third catalyst layer was present and the respective grid lines were connected with straight lines to identify the position of the surface of the third catalyst layer. When the amount of change in the thickness direction from an intersection P1 to an intersection P2 adjacent to the intersection P1 exceeded the interval between grid lines (15 µm), the intersection P2 was not used for identifying the surface position (that is, the intersection P2 was excluded from the intersections to be connected with straight lines). When the amount of change in the thickness direction from the intersection P1 to the intersection P2 adjacent to the intersection P1 exceeded 15 µm and the amount of change from the intersection P1 to an intersection P3 adjacent to the intersection P2 also exceeded 15 µm, the intersection P3 was not used in addition to the intersection P2 (that is, both intersections P2 and P3 were excluded from the intersections to be connected with straight lines). When five successive intersections were excluded in this manner, the BED image was not used for thickness measurement.

After identifying the position of the surface of the first catalyst layer, the position of the surface of the second catalyst layer, and the position of the surface of the third catalyst layer, the area of a first region surrounded by the second grid line, the eighth grid line, the surface of the first catalyst layer, and the surface of the second catalyst layer was determined using image analysis software. Similarly, the area of a second region surrounded by the second grid line, the eighth grid line, the surface of the second catalyst layer, and the surface of the third catalyst layer was determined. As the image analysis software, AreaQ (manufactured by S-Tech Corporation) was used. The first grid line and the ninth grid line were not used because the ends of the image tended to be unclear, making it difficult to identify the position of the surface of the first catalyst layer, the position of the surface of the second catalyst layer, and the position of the surface of the third catalyst layer.

After determining the areas of the first region and the second region, the thickness of each region was calculated based on the following formula: 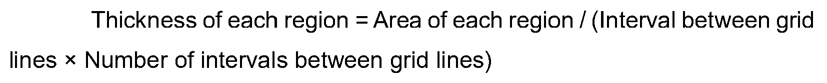 Thickness of each region = Area of each region / (Interval between grid lines × Number of intervals between grid lines)

The interval between grid lines was 15 µm, and the number of intervals was 6.

For 20 cells arbitrarily selected from the cross section, the thickness of the first region was calculated, and the average value thereof was defined as the average thickness of the second catalyst layer. For 20 cells arbitrarily selected from the cross section, the thickness of the second region was calculated, and the average value thereof was defined as the average thickness of the third catalyst layer.

The average thickness of the second catalyst layer was 40 µm, and the average thickness of the third catalyst layer was 3.3 µm. The characteristics of the second catalyst layer and the third catalyst layer in the exhaust gas purification catalyst of Example 1 are shown in Table 1.

In Table 1, the meanings of "Rh," "CeO₂", "Al₂O₃", "ZrO₂", "Al₂O₃ + ZrO₂", "Average thickness", and ""a"/"b"" are as follows.

### [Second catalyst layer]

Rh: Percentage of the mass of Rh in terms of metal in the second catalyst layer relative to the mass of the second catalyst layer (% by mass)
CeO₂: Percentage of the mass of Ce in terms of CeO₂ in the second catalyst layer relative to the mass of the second catalyst layer (% by mass)
Al₂O₃: Percentage of the mass of Al in terms of Al₂O₃ in the second catalyst layer relative to the mass of the second catalyst layer (% by mass)
ZrO₂: Percentage of the mass of Zr in terms of ZrO₂ in the second catalyst layer relative to the mass of the second catalyst layer (% by mass)
Al₂O₃ + ZrO₂: Percentage of the total of the mass of Al in terms of Al₂O₃ in the second catalyst layer and the mass of Zr in terms of ZrO₂ in the second catalyst layer relative to the mass of the second catalyst layer (% by mass)
Average thickness: Average thickness of the second catalyst layer (µm)

### [Third catalyst layer]

Rh: Percentage of the mass of Rh in terms of metal in the third catalyst layer relative to the mass of the third catalyst layer (% by mass)
CeO₂: Percentage of the mass of Ce in terms of CeO₂ in the third catalyst layer relative to the mass of the third catalyst layer (% by mass)
Al₂O₃: Percentage of the mass of Al in terms of Al₂O₃ in the third catalyst layer relative to the mass of the third catalyst layer (% by mass)
ZrO₂: Percentage of the mass of Zr in terms of ZrO₂ in the third catalyst layer relative to the mass of the third catalyst layer (% by mass)
Al₂O₃ + ZrO₂: Percentage of the total of the mass of Al in terms of Al₂O₃ in the third catalyst layer and the mass of Zr in terms of ZrO₂ in the third catalyst layer relative to the mass of the third catalyst layer (% by mass)
Average thickness: Average thickness of the third catalyst layer (µm)

### ["a"/"b"]

"a": Percentage of the mass of Rh in terms of metal in the third catalyst layer relative to the mass of the third catalyst layer (% by mass)
"b": Percentage of the mass of Rh in terms of metal in the second catalyst layer relative to the mass of the second catalyst layer (% by mass)

### <Example 2>

Except that the contents of components in the slurry for forming an upper layer were adjusted such that, based on the mass of the upper layer after calcination (100% by mass), the content of Rh in terms of metal was 0.5% by mass, the content of Ce in terms of CeO₂ was 5.0% by mass, the content of Zr in terms of ZrO₂ was 17.5% by mass, the content of Al in terms of Al₂O₃ was 74.5% by mass, and the content of rare-earth elements other than Ce in terms of oxides were 2.5% by mass, and that the mass of the upper layer per unit volume of the portion of the flow-through substrate on which the upper layer was formed was changed to 20 g/L, an exhaust gas purification catalyst of Example 2 was produced in the same manner as in Example 1. In the exhaust gas purification catalyst of Example 2, the lower layer, the middle layer, and the upper layer correspond to a first catalyst layer, a second catalyst layer, and a third catalyst layer, respectively.

The average thickness of the second catalyst layer and the average thickness of the third catalyst layer in the exhaust gas purification catalyst of Example 2 were calculated in the same manner as in Example 1. The average thickness of the second catalyst layer was 40 µm, and the average thickness of the third catalyst layer was 4.4 µm. The characteristics of the second catalyst layer and the third catalyst layer in the exhaust gas purification catalyst of Example 2 are shown in Table 1.

### <Example 3>

Except that the contents of components in the slurry for forming an upper layer were adjusted such that, based on the mass of the upper layer after calcination (100% by mass), the content of Rh in terms of metal was 0.3% by mass, the content of Ce in terms of CeO₂ was 3.3% by mass, the content of Zr in terms of ZrO₂ was 11.7% by mass, the content of Al in terms of Al₂O₃ was 83.0% by mass, and the content of rare-earth elements other than Ce in terms of oxides were 1.7% by mass, and that the mass of the upper layer per unit volume of the portion of the flow-through substrate on which the upper layer was formed was changed to 30 g/L, an exhaust gas purification catalyst of Example 3 was produced in the same manner as in Example 1. In the exhaust gas purification catalyst of Example 3, the lower layer, the middle layer, and the upper layer correspond to a first catalyst layer, a second catalyst layer, and a the third catalyst layer, respectively.

The average thickness of the second catalyst layer and the average thickness of the third catalyst layer in the exhaust gas purification catalyst of Example 3 were calculated in the same manner as in Example 1. The average thickness of the second catalyst layer was 40 µm, and the average thickness of the third catalyst layer was 6.6 µm. The characteristics of the second catalyst layer and the third catalyst layer in the exhaust gas purification catalyst of Example 3 are shown in Table 1.

### <Comparative Example 1>

Except that the contents of components in the slurry for forming a middle layer were adjusted such that, based on the mass of the middle layer after calcination (100% by mass), the content of Rh in terms of metal was 0.2% by mass, the content of Ce in terms of CeO₂ was 6.0% by mass, the content of Zr in terms of ZrO₂ was 21.0% by mass, the content of Al in terms of Al₂O₃ was 69.2% by mass, and the content of rare-earth elements other than Ce in terms of oxides were 3.6% by mass, and that the upper layer was not formed, an exhaust gas purification catalyst of Comparative Example 1 was produced in the same manner as in Example 1. In the exhaust gas purification catalyst of Comparative Example 1, the lower layer corresponds to a first catalyst layer. In the exhaust gas purification catalyst of Comparative Example 1, the middle layer was regarded as a laminate of second and third catalyst layers having the same composition. The characteristics of the second catalyst layer and the third catalyst layer in the exhaust gas purification catalyst of Comparative Example 1 are shown in Table 1.

### <Comparative Example 2>

Except that the contents of components in the slurry for forming a middle layer were adjusted such that, based on the mass of the middle layer after calcination (100% by mass), the content of Rh in terms of metal was 0.2% by mass, the content of Ce in terms of CeO₂ was 12.0% by mass, the content of Zr in terms of ZrO₂ was 42.0% by mass, the content of Al in terms of Al₂O₃ was 39.5% by mass, and the content of rare-earth elements other than Ce in terms of oxides were 6.3% by mass, an exhaust gas purification catalyst of Comparative Example 2 was produced in the same manner as in Comparative Example 1. In the exhaust gas purification catalyst of Comparative Example 2, the lower layer corresponds to a first catalyst layer. In the exhaust gas purification catalyst of Comparative Example 2, the middle layer was regarded as a laminate of second and third catalyst layers having the same composition. The characteristics of the second catalyst layer and the third catalyst layer in the exhaust gas purification catalyst of Comparative Example 2 are shown in Table 1.

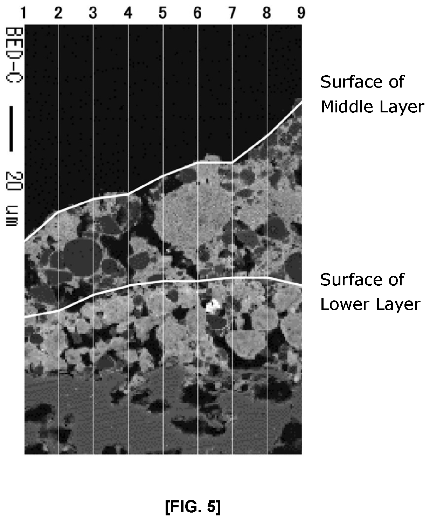

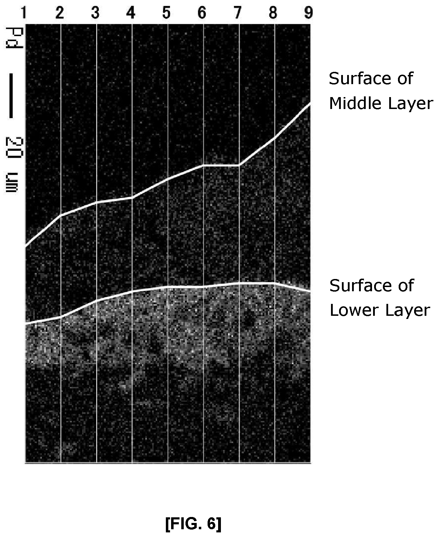

The BED observation image and element mapping image of the exhaust gas purification catalyst of Comparative Example 2 obtained in the same manner as in Example 1 are shown in FIGS. 5 and 6. FIG. 6 is a mapping image for Pd.

### <Comparative Example 3>

The flow-through substrate having the lower layer and the middle layer formed thereon as obtained in Example 1 (4) was immersed in an aqueous rhodium nitrate solution at 25°C for 48 hours. After immersion, the flow-through substrate was dried at 150°C for 0.5 hours and then calcined at 500°C for 1 hour to form a noble metal-containing surface layer containing Rh over the entire surface of the middle layer. In the middle layer after calcination, based on the mass of the middle layer (100% by mass), the content of Rh in terms of metal was 0.2% by mass, the content of Ce in terms of CeO₂ was 12.0% by mass, the content of Zr in terms of ZrO₂ was 42.0% by mass, the content of Al in terms of Al₂O₃ was 39.5% by mass, and the content of rare-earth elements other than Ce in terms of oxides was 6.3% by mass. Rh in the middle layer was not uniformly distributed in the thickness direction but was concentrated near the surface of the middle layer. In the exhaust gas purification catalyst of Comparative Example 3, the lower layer corresponds to a first catalyst layer. In the exhaust gas purification catalyst of Comparative Example 3, the portion of the middle layer other than the noble metal-containing surface layer was regarded as a second catalyst layer, and the noble metal-containing surface layer was regarded as a third catalyst layer. The characteristics of the second catalyst layer and the third catalyst layer in the exhaust gas purification catalyst of Comparative Example 3 are shown in Table 1. In Comparative Example 3, "CeO₂", "Al₂O₃", "ZrO₂", and "Al₂O₃ + ZrO₂" for the entire middle layer were regarded as "CeO₂", "Al₂O₃", "ZrO₂", and "Al₂O₃ + ZrO₂" for the second catalyst layer and the third catalyst layer.

### <Comparative Example 4>

Except that the contents of components in the slurry for forming an upper layer were adjusted such that, based on the mass of the upper layer after calcination (100% by mass), the content of Rh in terms of metal was 0.2% by mass, the content of Ce in terms of CeO₂ was 1.7% by mass, the content of Zr in terms of ZrO₂ was 5.8% by mass, the content of Al in terms of Al₂O₃ was 91.5% by mass, and the content of rare-earth elements other than Ce in terms of oxides was 0.8% by mass, and that the mass of the upper layer per unit volume of the portion of the flow-through substrate on which the upper layer was formed was set to 60 g/L, an exhaust gas purification catalyst of Comparative Example 4 was produced in the same manner as in Example 1. In the exhaust gas purification catalyst of Comparative Example 4, the lower layer, the middle layer, and the upper layer correspond to a first catalyst layer, a second catalyst layer, and a third catalyst layer, respectively. The average thickness of the second catalyst layer and the average thickness of the third catalyst layer in the exhaust gas purification catalyst of Comparative Example 4 were calculated by the method described above. The average thickness of the second catalyst layer was 40 µm, and the average thickness of the third catalyst layer was 13.2 µm. The characteristics of the second catalyst layer and the third catalyst layer in the exhaust gas purification catalyst of Comparative Example 4 are shown in Table 1.

### <Test Example>

After subjecting the exhaust gas purification catalysts of Examples 1 to 3 and Comparative Examples 1 to 4 to durability treatment, the exhaust gas purification performance and the OSC performance were evaluated as follows. The durability treatment was performed by heat-treating the catalysts at 1000°C for 30 hours in an atmosphere in which 0.50% O₂ gas, 10% water vapor, and N₂ as a balance gas were flowed.

### <Exhaust Gas Purification Performance Test>

Among harmful components, the purification performance for hydrocarbons (HC) was measured as a representative. A model gas having the composition shown below and an A/F of 14.6 was flowed at 32 L/min through the exhaust gas purification catalyst (catalyst volume 15 mL) after durability treatment, while adjusting the CO concentration and the O₂ concentration so that the A/F varied within the range of 14.4 to 14.8. The temperature of the gas flowing into the exhaust gas purification catalyst was gradually increased from room temperature at a predetermined heating rate, and the amount of HC contained in the exhaust gas passing through the catalyst was measured using the device shown below. The HC purification efficiency was calculated based on the following formula. In the following formula, V represents the detected amount when the catalyst is not installed, and W represents the detected amount after the catalyst is installed. $HC purification efficiency \left(%\right) = \left(V-W\right) / V \times 100$
[Model gas (composition on a volume basis)] CO: 0.3%, C₃H₆: 1000 ppmC, NO: 500 ppm, O₂: 0.28%, CO₂: 14%, H₂O: 10%, N₂: balance
[Heating rate] 10°C/min
[Measuring device] MOTOR EXHAUST GAS ANALYZER MEXA7100 (manufactured by Horiba, Ltd.)

The inlet gas temperatures (°C) of the catalyst when the HC purification efficiency reached 50% and 80% were determined as the light-off temperatures T50 and T80, respectively. T50 and T80 were measured during heating. The measurement results of T50 and T80 are shown in Table 2. T50 is greatly affected by the deterioration state of the catalyst due to durability treatment and is therefore an indicator of heat resistance. The smaller the T50, the higher the heat resistance. T80 is more affected by the contact between the catalyst and the exhaust gas than by the deterioration state of the catalyst and is therefore an indicator of the contact between the catalyst and the exhaust gas. The smaller the T80, the higher the contact between the catalyst and the exhaust gas.

### <OSC Performance Test>

Model gases 1 and 2 having the compositions shown below were alternately flowed at 32 L/min every 1 minute through the exhaust gas purification catalyst (catalyst volume 15 mL) after durability treatment. The gas temperature flowing into the exhaust gas purification catalyst was fixed at 500°C. The time until the CO concentration contained in the exhaust gas passing through the catalyst reached 0.25% after switching from model gas 1 to model gas 2 (hereinafter referred to as "delay time") was measured using the device shown below. The difference in delay time was calculated based on the following formula. In the following formula, X represents the delay time when the catalyst is not installed, and Y represents the delay time after the catalyst is installed. $Difference in delay time \left(s\right) = Y - X$
[Model gas 1 (composition on a volume basis)] O₂: 0.5%, N₂: balance
[Model gas 2 (composition on a volume basis)] CO: 0.5%, N₂: balance
[Measuring device] MOTOR EXHAUST GAS ANALYZER MEXA7100 (manufactured by Horiba, Ltd.)

The difference in delay time is an indicator of OSC. The larger the difference in delay time, the larger the OSC. Therefore, the difference in delay time was determined as a relative value with the value of Comparative Example 1 set to 100, and this was defined as OSC. The measurement results of OSC are shown in Table 2.

The reason why the difference in delay time is an indicator of OSC is as follows.

In the test system, a model gas supply section, a catalyst installation section, and a gas concentration meter installation section are arranged in this order. While model gas 1 is flowing, the CO concentration detected by the gas concentration meter is zero. When the catalyst is not installed, switching from model gas 1 to model gas 2 results in CO in model gas 2 being detected without being consumed. When the catalyst is installed, switching from model gas 1 to model gas 2 results in CO in model gas 2 being consumed by oxygen stored in the catalyst, so the CO concentration detected by the gas concentration meter remains low. The more oxygen stored in the catalyst, the longer the CO concentration detected by the gas concentration meter remains low. Therefore, the difference in delay time is an indicator of OSC capability.

### [Table 1]

**Table 1**

| | Second catalyst layer | | | | | |
|---|---|---|---|---|---|---|
| | Rh (% by mass) | CeO₂ (% by mass) | Al₂O₃ (% by mass) | ZrO₂ (% by mass) | Al₂O₃+ZrO₂ (% by mass) | Average thickness (µm) |
| Example 1 | 0.1 | 12.0 | 39.6 | 42.0 | 81.6 | 40 |
| Example 2 | 0.1 | 12.0 | 39.6 | 42.0 | 81.6 | 40 |
| Example 3 | 0.1 | 12.0 | 39.6 | 42.0 | 81.6 | 40 |
| Comparative Example 1 | 0.2 | 6.0 | 69.2 | 21.0 | 90.2 | - |
| Comparative Example 2 | 0.2 | 12.0 | 39.5 | 42.0 | 81.5 | - |
| Comparative Example 3 | < 0.2 | 12.0 | 39.5 | 42.0 | 81.5 | - |
| Comparative Example 4 | 0.1 | 12.0 | 39.6 | 42.0 | 81.6 | 40 |

**Table 1 (continued)**

| | Third catalyst layer | | | | | | a/b |
|---|---|---|---|---|---|---|---|
| | Rh (% by mass) | CeO₂ (% by mass) | Al₂O₃ (% by mass) | ZrO₂ (% by mass) | Al₂O₃+ZrO₂ (% by mass) | Average thickness (µm) | |
| Example 1 | 0.7 | 6.7 | 66.0 | 23.3 | 89.3 | 3.3 | 7.0 |
| Example 2 | 0.5 | 5.0 | 74.5 | 17.5 | 92.0 | 4.4 | 5.0 |
| Example 3 | 0.3 | 3.3 | 83.0 | 11.7 | 94.7 | 6.6 | 3.0 |
| Comparative Example 1 | 0.2 | 6.0 | 69.2 | 21.0 | 90.2 | - | 1.0 |
| Comparative Example 2 | 0.2 | 12.0 | 39.5 | 42.0 | 81.5 | - | 1.0 |
| Comparative Example 3 | > 0.2 | 12.0 | 39.5 | 42.0 | 81.5 | - | > 1.0 |
| Comparative Example 4 | 0.2 | 1.7 | 91.5 | 5.8 | 97.3 | 13.2 | 2.0 |

**[Table 2]**

| | OSC | T50 (°C) | T80 (°C) |
|---|---|---|---|
| Example 1 | 111 | 362 | 372 |
| Example 2 | 111 | 351 | 370 |
| Example 3 | 113 | 335 | 376 |
| Comparative Example 1 | 100 | 371 | 387 |
| Comparative Example 2 | 117 | 378 | 389 |
| Comparative Example 3 | 112 | 383 | 387 |
| Comparative Example 4 | 118 | 362 | 392 |

Each of the exhaust gas purification catalysts of Examples 1 to 3 is an exhaust gas purification catalyst including a substrate, a first catalyst layer provided on the substrate, a second catalyst layer provided on the first catalyst layer, and a third catalyst layer provided on the second catalyst layer, wherein the first catalyst layer contains Pd, wherein the second catalyst layer contains Rh and Ce, and wherein the third catalyst layer contains Rh and Al and/or Zr, and wherein the exhaust gas purification catalyst satisfies the following conditions (1) to (4). In contrast, each of the exhaust gas purification catalysts of Comparative Examples 1 to 4 is an exhaust gas purification catalyst including a substrate, a first catalyst layer provided on the substrate, a second catalyst layer provided on the first catalyst layer, and a third catalyst layer provided on the second catalyst layer, wherein the first catalyst layer contains Pd, wherein the second catalyst layer contains Rh and Ce, wherein the third catalyst layer contains Rh and Al and/or Zr, and wherein the exhaust gas purification catalyst does not satisfy at least one of the following conditions (1) to (4).
(1) The second catalyst layer and the third catalyst layer satisfy the following formula: $" a " > " b "$ wherein, "a" represents a percentage of a mass of Rh in terms of metal in the third catalyst layer relative to a mass of the third catalyst layer, and "b" represents a percentage of a mass of Rh in terms of metal in the second catalyst layer relative to a mass of the second catalyst layer.
(2) A percentage of a mass of Ce in terms of CeO₂ in the second catalyst layer relative to the mass of the second catalyst layer is 7% by mass or more.
(3) A percentage of a mass of Ce in terms of CeO₂ in the third catalyst layer relative to the mass of the third catalyst layer is less than 7% by mass.
(4) An average thickness of the third catalyst layer is 10 µm or less.

Comparative Example 1 does not satisfy condition (1); therefore, improvement in the contact between exhaust gas and Rh contained in the third catalyst layer cannot be achieved, and thus T80 was high (i.e., the contact between the exhaust gas and the catalyst was poor). Further, Comparative Example 1 does not satisfy condition (2); therefore, improvement in the OSC of the second catalyst layer cannot be achieved, and thus the OSC was low.

Comparative Example 2 does not satisfy condition (1); therefore, improvement in the contact between exhaust gas and Rh contained in the third catalyst layer cannot be achieved, and thus T80 was high (i.e., the contact between the exhaust gas and the catalyst was poor). Further, Comparative Example 2 does not satisfy condition (3); therefore, improvement in the heat resistance of the third catalyst layer cannot be achieved, and thus T50 was high (i.e., the heat resistance was low).

Comparative Example 3 does not satisfy condition (3); therefore, improvement in the heat resistance of the third catalyst layer cannot be achieved, and thus T50 was high (i.e., the heat resistance was low). Although Comparative Example 3 satisfies conditions (1) and (4), T80 was high (i.e., the contact between the exhaust gas and the catalyst was poor). It is considered that, because Comparative Example 3 does not satisfy condition (3), aggregation of Rh in the third catalyst layer occurs and active sites are decreased, and thus T80 is high despite satisfying conditions (1) and (4).

Comparative Example 4 does not satisfy condition (4); therefore, improvement in the contact between exhaust gas and a catalytically active component contained in a portion below the third catalyst layer cannot be achieved, and thus T80 was high (i.e., the contact between the exhaust gas and the catalyst was poor).

Examples 1 to 3 satisfy condition (1); therefore, improvement in the contact between exhaust gas and Rh contained in the third catalyst layer can be achieved, and thus T80 was low (i.e., the contact between the exhaust gas and the catalyst was high).

Examples 1 to 3 satisfy condition (2); therefore, improvement in the OSC of the second catalyst layer can be achieved, and thus the OSC was high.

Examples 1 to 3 satisfy condition (3); therefore, improvement in the heat resistance of the third catalyst layer can be achieved, and thus T50 was low (i.e., the heat resistance was high).

Examples 1 to 3 satisfy condition (4); therefore, improvement in the contact between exhaust gas and a catalytically active component contained in a portion below the third catalyst layer can be achieved, and thus T80 was low (i.e., the contact between the exhaust gas and the catalyst was high).

### DESCRIPTION OF REFERENCE SIGNS

P: Exhaust pipe of internal combustion engine
1: Exhaust gas purification catalyst
10: Substrate
11: Tubular member
12: Partition wall
13: cell
20: First catalyst layer
30: Second catalyst layer
40: Third catalyst layer

## Claims

1. An exhaust gas purification catalyst comprising: a substrate; a first catalyst layer provided on the substrate; a second catalyst layer provided on the first catalyst layer; and a third catalyst layer provided on the second catalyst layer,
wherein the first catalyst layer comprises Pd,
wherein the second catalyst layer comprises Rh and Ce,
wherein the third catalyst layer comprises Rh and Al and/or Zr,
wherein the second catalyst layer and the third catalyst layer satisfy the following formula: $" a " > " b " ,$
wherein "a" represents a percentage of a mass of Rh in terms of metal in the third catalyst layer relative to a mass of the third catalyst layer, and "b" represents a percentage of a mass of Rh in terms of metal in the second catalyst layer relative to a mass of the second catalyst layer,
wherein a percentage of a mass of Ce in terms of CeO₂ in the second catalyst layer relative to the mass of the second catalyst layer is 7% by mass or more,
wherein a percentage of a mass of Ce in terms of CeO₂ in the third catalyst layer relative to the mass of the third catalyst layer is less than 7% by mass, and
wherein an average thickness of the third catalyst layer is 10 µm or less.

2. The exhaust gas purification catalyst as claimed in claim 1, wherein a percentage of a total of a mass of Al in terms of Al₂O₃ in the third catalyst layer and a mass of Zr in terms of ZrO₂ in the third catalyst layer relative to the mass of the third catalyst layer is 80% by mass or more.

3. The exhaust gas purification catalyst as claimed in claim 1 or 2, wherein "a"/"b", which is a ratio of "a" to "b", is 2 or more and 10 or less.

4. The exhaust gas purification catalyst as claimed in claim 3, wherein "b" is 0.01% by mass or more and 5% by mass or less.

5. The exhaust gas purification catalyst as claimed in claim 1 or 2, wherein the average thickness of the third catalyst layer is 0.5 µm or more and 5 µm or less.
